# EUROPEAN PATENT APPLICATION

(11) **EP 3 372 871 A1**
(43) Date of publication of application: **12.09.2018**
(21) Application number: 17756696.5
(22) Date of filing: 27.02.2017
(51) Int. Cl.: F16H 61/00

(54) **VEHICLE TRANSMISSION HYDRAULIC CONTROL DEVICE**

(30) Priority: 25.02.2016 JP 2016034099; 30.09.2016 JP 2016194855; 04.11.2016 JP 2016216123; 26.12.2016 JP 2016252009; 10.01.2017 JP 2017002043
(71) Applicant: Aisin Aw Co., Ltd., Anjo-shi, Aichi 444-1192 (JP)
(72) Inventor: KIDOKORO, Eikichi, Anjo-shi Aichi 444-1192 (JP); MATSUYAMA, Kaname, Anjo-shi Aichi 444-1192 (JP)
(74) Representative: TBK
(86) International application number: PCT/JP2017/007580
(87) International publication number: WO 2017/146262

(57) **Abstract**

A hydraulic controller includes a first oil passage (81) that communicates two ports of a plurality of solenoid valves (70, 79) having a plurality of ports with each other, a second oil passage (82) that communicates two ports of a plurality of valves (66) having a plurality of ports with each other, and a third oil passage (83, 84) provided in a third region (50c) provided in an overlapping manner between a first region (50a) in which the first oil passage (81) is arranged and a second region (50b) in which the second oil passage (82) is arranged, the third oil passage (83, 84) being orthogonal to an overlapping direction (L) of the first region (50a) and the second region (50b). The third oil passage (83, 84) communicates any one port out of the ports of the solenoid valves (70, 79) and any one port out of the ports of the valves (66) with each other.

## Description

### TECHNICAL FIELD

The present invention relates to a hydraulic controller for a vehicle transmission apparatus to be mounted on, for example, a vehicle.

### BACKGROUND ART

Hitherto, a hydraulic controller including various valves such as a plurality of linear solenoid valves and selector valves (hereinafter referred to simply as valves) and a valve body having oil passages that communicate the valves with each other is widely available as a hydraulic controller for a vehicle transmission apparatus. A mainstream valve body is a metal valve body formed by aluminum die casting or the like. For example, there is a valve body formed by stacking a plurality of bodies and fastening the bodies with bolts. As this valve body, there is known a valve body formed by stacking, while interposing a separation plate, a solenoid body that houses linear solenoid valves and a valve body that houses selector valves and fastening the solenoid body and the valve body with bolts (see Patent Document 1). In this valve body, the linear solenoid valves of the solenoid body and the selector valves of the valve body are arranged so as to face each other across the separator plate. Therefore, the linear solenoid valves and the selector valves communicate their oil passages with each other by oil passages formed in the solenoid body, oil passages formed in the valve body, and through holes of the separation plate provided between the respective oil passages, thereby causing hydraulic oil to flow between the linear solenoid valves and the selector valves.

Regarding arrangement of the oil passages, for example, the oil passage that communicates from a port of the linear solenoid valve communicates with the through hole of the separation plate while bypassing the other ports and oil passages along one side surface of the separation plate, passes further through the through hole toward the opposite side, and communicates with a port of the selector valve while bypassing the other ports and oil passages along the other side surface of the separation plate. In this manner, the linear solenoid valve and the selector valve communicate with each other. That is, in the solenoid body, the ports of the linear solenoid valves and the oil passages that communicate the valves with each other are located in a mixed manner within the same plane, and in the valve body, the ports of the selector valves and the oil passages that communicate the valves with each other are located in a mixed manner within the same plane (see FIG. 7 of Patent Document 1).

### Related Art Documents

### Patent Documents

Patent Document 1: Japanese Patent Application Publication No. 2011-112062 (JP 2011-112062 A)

### SUMMARY OF THE INVENTION

### Problem to be Solved by the Invention

In the valve body described above, however, the ports of the valves and the oil passages are located in a mixed manner within the same plane in each of the solenoid body and the valve body. Therefore, each oil passage needs to be arranged so as to bypass the ports. Thus, the length of the oil passage increases, thereby causing a problem in that the size of the valve body increases.

It is therefore an object to provide a hydraulic controller for a vehicle transmission apparatus, in which an increase in the size of a valve body can be suppressed by suppressing an increase in the length of each oil passage in an oil passage layer provided between two valve layers.

### Means for Solving the Problem

A hydraulic controller for a vehicle transmission apparatus according to the present disclosure is a hydraulic controller configured to control a hydraulic pressure of oil to be output from an oil pump and supplied to the vehicle transmission apparatus. The hydraulic controller includes a first oil passage that communicates two ports of a plurality of solenoid valves having a plurality of ports with each other, a second oil passage that communicates two ports of a plurality of valves having a plurality of ports with each other, and a third oil passage provided in a third region provided in an overlapping manner between a first region in which the first oil passage is arranged and a second region in which the second oil passage is arranged, the third oil passage being orthogonal to an overlapping direction of the first region and the second region. The third oil passage communicates any one port out of the ports of the solenoid valves and any one port out of the ports of the valves with each other.

### Effects of the Invention

According to the hydraulic controller for a vehicle transmission apparatus, the third oil passage provided in the third region is provided orthogonally to the overlapping direction of the first region and the second region, and communicates one port of the solenoid valve and one port of the valve with each other. Therefore, in the third region, the oil passage and the ports of the solenoid valve and the valve can be prevented from being located in the same region in a mixed manner. Thus, the third oil passage does not need to bypass the ports significantly. Accordingly, the increase in the size of the valve body can be suppressed by suppressing the increase in the length of the oil passage between the solenoid valve and the valve.

### BRIEF DESCRIPTION OF THE DRAWINGS

[FIG. 1] FIG. 1 is a skeleton diagram illustrating a vehicle transmission apparatus according to a first embodiment.
[FIG. 2] FIG. 2 is an engagement table of the vehicle transmission apparatus according to the first embodiment.
[FIG. 3] FIG. 3 is a hydraulic circuit diagram of a hydraulic controller according to the first embodiment.
[FIG. 4] FIG. 4 is a perspective view illustrating the hydraulic controller according to the first embodiment.
[FIG. 5] FIG. 5 is an exploded perspective view illustrating the hydraulic controller according to the first embodiment.
[FIG. 6] FIG. 6 is a plan view illustrating a fourth surface of a third block of a valve body of the hydraulic controller according to the first embodiment.
[FIG. 7] FIG. 7 is a plan view illustrating a sixth surface of a fifth block of the valve body of the hydraulic controller according to the first embodiment.
[FIG. 8] FIG. 8 is a plan view illustrating a seventh surface of a sixth block of the valve body of the hydraulic controller according to the first embodiment.
[FIG. 9] FIG. 9 is a sectional view of a linear solenoid valve SLU and an L/U relay valve of the hydraulic controller according to the first embodiment.
[FIG. 10] FIG. 10 is a sectional view of a linear solenoid valve SLT and a regulator valve of the hydraulic controller according to the first embodiment.
[FIG. 11A] FIG. 11A is a hydraulic circuit diagram of a first coupling pattern in the hydraulic controller according to the first embodiment.
[FIG. 11B] FIG. 11B is a hydraulic circuit diagram of a second coupling pattern in the hydraulic controller according to the first embodiment.
[FIG. 11C] FIG. 11C is a hydraulic circuit diagram of a third coupling pattern in the hydraulic controller according to the first embodiment.
[FIG. 12A] FIG. 12A is a hydraulic circuit diagram of a fourth coupling pattern in the hydraulic controller according to the first embodiment.
[FIG. 12B] FIG. 12B is a hydraulic circuit diagram of a fifth coupling pattern in the hydraulic controller according to the first embodiment.
[FIG. 13] FIG. 13 is a sectional view of a hydraulic controller according to a second embodiment.
[FIG. 14] FIG. 14 is a sectional view of a hydraulic controller according to a third embodiment.
[FIG. 15] FIG. 15 is a sectional view of a hydraulic controller according to a fourth embodiment.
[FIG. 16] FIG. 16 is a schematic diagram illustrating a vehicle on which a hydraulic controller for a vehicle transmission apparatus according to a fifth embodiment is mounted.
[FIG. 17] FIG. 17 is a perspective view illustrating the hydraulic controller according to the fifth embodiment.
[FIG. 18] FIG. 18 is a bottom view illustrating the hydraulic controller according to the fifth embodiment.
[FIG. 19] FIG. 19 is a sectional view illustrating a state cut along a line IV-IV in FIG. 18.
[FIG. 20A] FIG. 20A is a plan view of a modified example of a sleeve according to the fifth embodiment.
[FIG. 20B] FIG. 20B is a side view of the modified example of the sleeve according to the fifth embodiment.
[FIG. 20C] FIG. 20C is a sectional view illustrating a state cut along a line V-V in FIG. 20A.

### MODES FOR CARRYING OUT THE INVENTION

### <First Embodiment>

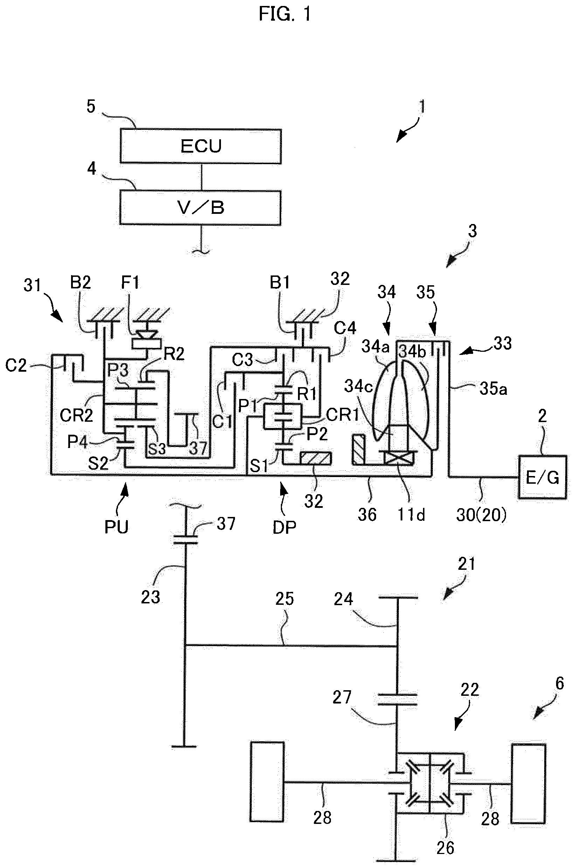

A first embodiment of a hydraulic controller for a vehicle transmission apparatus is described below with reference to FIG. 1 to FIG. 10. First, the schematic structure of a vehicle 1 on which an automatic transmission 3 is mounted as an example of the vehicle transmission apparatus is described with reference to FIG. 1. For example, the automatic transmission 3 of this embodiment is suitably mounted on a front-engine, front-wheel-drive (FF) vehicle. A lateral direction in FIG. 1 corresponds to a lateral direction (or a reverse lateral direction) in a state in which the automatic transmission 3 is actually mounted on the vehicle. The automatic transmission 3 is not limited to the FF type, but may be a front-engine, rear-wheel-drive (FR) type. Further, the same hydraulic controller 4 may be used both for the FF type automatic transmission 3 and for the FR type automatic transmission. In this embodiment, a case of a vehicle using an internal combustion engine alone as a drive source is described as an example of the vehicle to which the vehicle transmission apparatus is applied. The present invention is not limited to this case. For example, the vehicle transmission apparatus may be applied to a hybrid vehicle using an internal combustion engine and an electric motor as the drive source.

The expression "drivably couple" herein refers to a state in which rotary elements are coupled to each other so that a driving force is transferrable therebetween, and is used as a concept including a state in which the rotary elements are coupled to each other so as to rotate together, or a state in which the rotary elements are coupled to each other so that the driving force is transferrable therebetween via clutches or the like. In this embodiment, a speed change mechanism 31 has eight forward speeds, but is not limited thereto. For example, there may be employed a stepped transmission that achieves three to seven forward speeds, or a continuously variable transmission with a stepped transmission.

As illustrated in FIG. 1, the vehicle 1 of this embodiment includes, for example, an internal combustion engine 2, the automatic transmission 3, the hydraulic controller 4 and an ECU (controller) 5 configured to control the automatic transmission 3, and wheels 6. For example, the internal combustion engine 2 is an internal combustion engine such as a gasoline engine or a diesel engine, and is coupled to the automatic transmission 3. The automatic transmission 3 includes an input shaft 30, a starting device 33, the speed change mechanism 31, a countershaft unit 21, a differential unit 22, and a case 32 that houses those components. The input shaft 30 of the automatic transmission 3 is drivably coupled to a rotary shaft 20 of the internal combustion engine 2.

The starting device 33 includes a torque converter 34 and a lock-up clutch 35 capable of locking up the torque converter 34. The torque converter 34 includes a pump impeller 34a connected to the input shaft 30 of the automatic transmission 3, a turbine runner 34b to which rotation of the pump impeller 34a is transferred via oil that is a fluid, and a stator 34c which is arranged between the pump impeller 34a and the turbine runner 34b and whose rotation is restricted to one direction by a one-way clutch 11d. The turbine runner 34b is connected to an input shaft 36 of the speed change mechanism 31 that is coaxial with the input shaft 30. The lock-up clutch 35 engages itself to directly engage a front cover 35a and the input shaft 36 of the speed change mechanism 31 with each other, thereby achieving a state in which the torque converter 34 is locked up.

The speed change mechanism 31 includes a planetary gear set DP and a shifting planetary gear unit PU on the input shaft 36. Further, the speed change mechanism 31 includes first to fourth clutches C1 to C4 and first and second brakes B1 and B2 as a plurality of engagement elements. The plurality of engagement elements are provided on a power transfer path ranging from the lock-up clutch 35 to a counter gear 37 described later. The engagement elements engage or disengage through supply or release of hydraulic pressures. Therefore, a plurality of shift speeds can selectively be achieved depending on combinations of simultaneous engagement. The speed change mechanism 31 includes unillustrated hydraulic servomechanisms capable of engaging or disengaging the engagement elements through the supply or release of the hydraulic pressures.

The planetary gear set DP includes a first sun gear S1, a first carrier CR1, and a first ring gear R1. The planetary gear set DP is a so-called double-pinion type planetary gear set in which the first carrier CR1 has pinions P2 meshing with the first sun gear S1 and pinions P1 meshing with the first ring gear R1 such that the pinions P2 and the pinions P1 mesh with each other.

The planetary gear unit PU includes a second sun gear S2, a third sun gear S3, a second carrier CR2, and a second ring gear R2 as four rotary elements. The planetary gear unit PU is a so-called Ravigneaux type planetary gear unit in which the second carrier CR2 has long pinions P3 meshing with the third sun gear S3 and the second ring gear R2 and short pinions P4 meshing with the second sun gear S2 such that the long pinions P3 and the short pinions P4 mesh with each other.

Rotation of the first sun gear S1 of the planetary gear set DP is fixed to the case 32. The first carrier CR1 is connected to the input shaft 36, and rotation of the first carrier CR1 is the same as rotation of the input shaft 36 (hereinafter referred to as input rotation). Further, the first carrier CR1 is connected to the fourth clutch C4. Rotation of the first ring gear R1 is reduced-speed rotation such that the speed of input rotation of the first ring gear R1 is reduced by the fixed first sun gear S1 and the first carrier CR1 having the input rotation. Further, the first ring gear R1 is connected to the first clutch C1 and the third clutch C3.

The third sun gear S3 of the planetary gear unit PU is freely fixable to the case 32 by being connected to the first brake B1. Further, the third sun gear S3 is connected to the fourth clutch C4 and the third clutch C3. Therefore, the input rotation of the first carrier CR1 is freely inputtable to the third sun gear S3 via the fourth clutch C4, and the reduced-speed rotation of the first ring gear R1 is freely inputtable to the third sun gear S3 via the third clutch C3. The second sun gear S2 is connected to the first clutch C1. Therefore, the reduced-speed rotation of the first ring gear R1 is freely inputtable to the second sun gear S2.

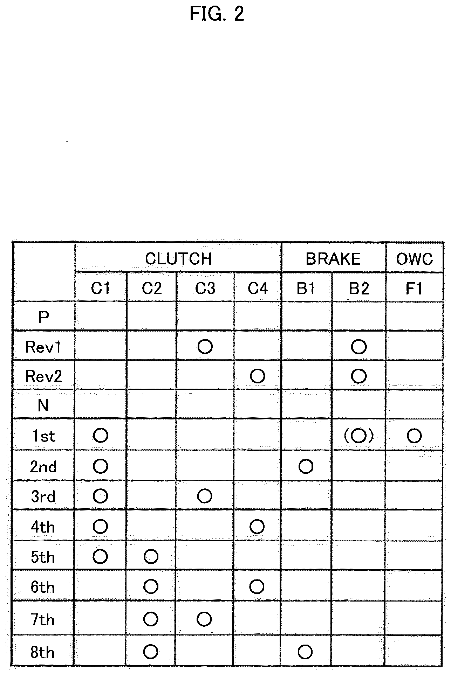

The second carrier CR2 is connected to the second clutch C2 to which the rotation of the input shaft 36 is input. Therefore, the input rotation is freely inputtable to the second carrier CR2 via the second clutch C2. Further, the second carrier CR2 is connected to the second brake B2 and a one-way clutch (OWC) F1. Therefore, rotation of the second carrier CR2 is freely fixable via the second brake B2 or the one-way clutch F1. The second ring gear R2 is connected to the counter gear 37 that is supported in a freely rotatable manner to a center support member fixed to the case 32. The counter gear 37 is connected to the differential unit 22 by the countershaft unit 21. The automatic transmission 3 achieves the shift speeds through simultaneous engagement of two engagement elements out of the plurality of engagement elements (see FIG. 2).

Regarding an output from the counter gear 37, the speed change mechanism 31 structured as described above achieves a first forward speed (1st) to an eighth forward speed (8th), a first reverse speed (Rev1), and a second reverse speed (Rev2) such that the first clutch C1 to the fourth clutch C4, the first brake B1, and the second brake B2 illustrated in a skeleton diagram of FIG. 1 engage or disengage in combinations illustrated in an engagement table of FIG. 2.

As illustrated in FIG. 1, the countershaft unit 21 includes a driven gear 23, a driving gear 24, and a countershaft 25. The countershaft unit 21 transfers the rotation of the counter gear 37 to an input gear 27 of the differential unit 22. The driven gear 23 meshes with the counter gear 37. The driving gear 24 meshes with the input gear 27. The driven gear 23 and the driving gear 24 are coupled to each other by the countershaft 25. The number of teeth provided on the driving gear 24 is smaller than the number of teeth provided on the driven gear 23. The countershaft unit 21 reduces the speed of the rotation of the counter gear 37.

The differential unit 22 includes a differential gear 26 and the input gear 27. Axles 28 and 28 of the right and left wheels (front wheels) 6 are connected to the differential gear 26. Thus, the differential unit 22 outputs the rotation input to the input gear 27 to the wheels 6 via the differential gear 26.

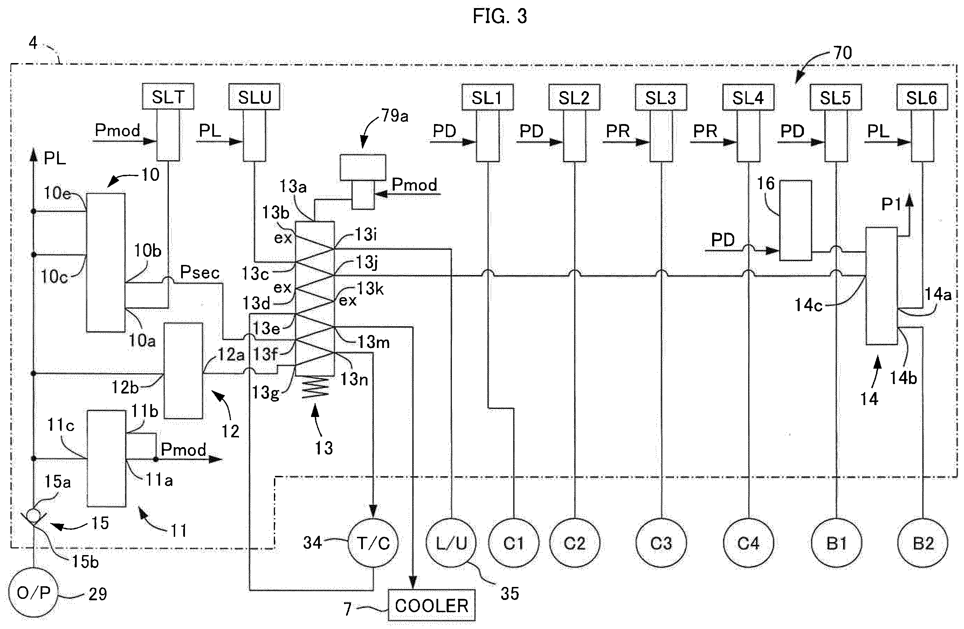

For example, the hydraulic controller 4 is structured by a valve body, and generates a line pressure, a modulator pressure, and the like from a hydraulic pressure supplied from an oil pump 29 (see FIG. 3). Therefore, hydraulic pressures for controlling the first to fourth clutches C1 to C4, the first and second brakes B1 and B2, and the lock-up clutch 35 can be supplied or released based on a control signal from the ECU 5. The detailed structure of the hydraulic controller 4 is described later.

For example, the ECU 5 includes a CPU, a ROM that stores a processing program, a RAM that temporarily stores data, input and output ports, and a communication port. The ECU 5 outputs various signals such as a control signal for the hydraulic controller 4 from the output port. The ECU 61 sets the shift speeds of the automatic transmission 3 based on, for example, a vehicle speed and a depression amount of an accelerator pedal, and outputs a control signal for engaging or disengaging, for example, the first to fourth clutches C1 to C4 and the first and second brakes B1 and B2 in order to achieve the shift speeds.

Next, the structure of the hydraulic controller 4 described above is described in detail with reference to FIG. 3 to FIG. 10. First, the schematic structure of a hydraulic circuit of the hydraulic controller 4 is described with reference to FIG. 3. The hydraulic controller 4 includes linear solenoid valves SLU, SLT, and SL1 to SL6, an ON/OFF solenoid valve 79a, a regulator valve 10, a solenoid modulator valve 11, a circulation modulator valve 12, a lock-up (L/U) relay valve 13, a sequence valve 14, a check valve 15, a clutch control valve 16, and a manual valve (not illustrated). As described later in detail, each of the linear solenoid valves SLU, SLT, and SL1 to SL6 includes a pressure regulating unit configured to regulate a hydraulic pressure, and a solenoid unit configured to drive the pressure regulating unit to be pressed based on an electric signal. Each of the linear solenoid valves SLU, SLT, and SL1 to SL6 regulates and outputs the supplied hydraulic pressure based on the electric signal from the ECU 5.

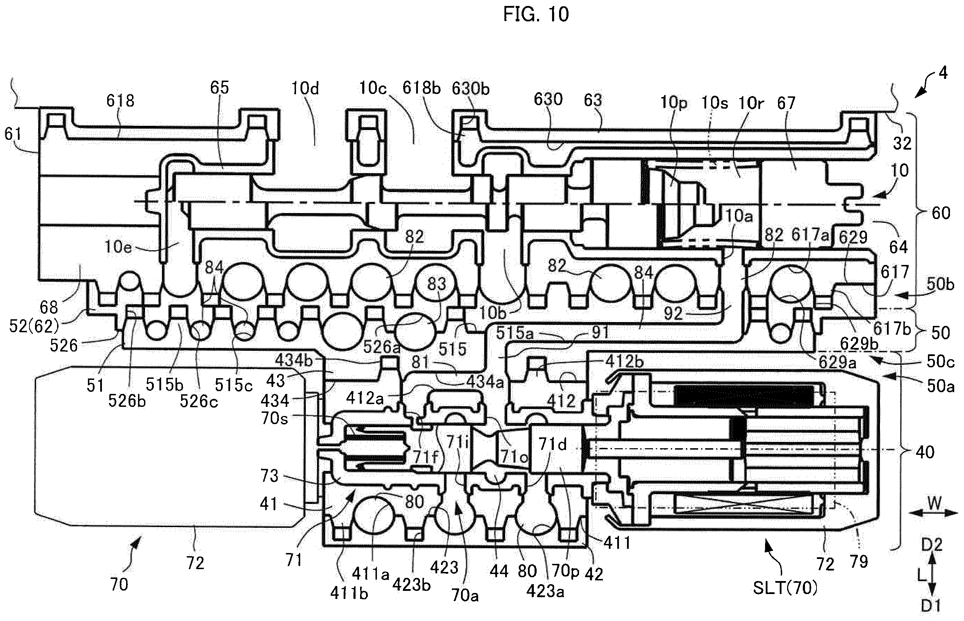

The regulator valve 10 is a spool valve including a spool 10p and an urging spring 10s serving as an urging member (see FIG. 10). The regulator valve 10 regulates a line pressure PL such that the spool 10p moves based on a relationship between a hydraulic pressure supplied from the linear solenoid valve SLT and an urging force of the urging spring 10s. The regulator valve 10 includes a port 10a to which an output pressure of the linear solenoid valve SLT is input, a port 10b that communicates with the L/U relay valve 13 and outputs a secondary pressure Psec, a port 10c that regulates the line pressure PL, a port 10d (see FIG. 10) that returns oil to the oil pump 29, and a port 10e for feedback.

The solenoid modulator valve 11 is a spool valve, and regulates a modulator pressure Pmod by using the line pressure PL as a source pressure. The solenoid modulator valve 11 includes a port 11a that outputs the modulator pressure Pmod, a port 11b for feedback, and a port 11c to which the line pressure PL is input. For example, the modulator pressure Pmod is a source pressure of the linear solenoid valve SLT and the ON/OFF solenoid valve 79a.

The check valve 15 includes an input port 15b that communicates with the oil pump 29, and an output port 15a that communicates with the port 10c of the regulator valve 10. The source pressure generated by the oil pump 29 is input to the hydraulic controller 4 via the check valve 15, and the hydraulic controller 4 causes the regulator valve 10 to regulate the pressure as the line pressure PL based on a throttle opening degree. The solenoid modulator valve 11 regulates the line pressure PL, and generates the modulator pressure Pmod that is a constant pressure lower than the line pressure PL. The modulator pressure Pmod is supplied to the linear solenoid valve SLT, and the linear solenoid valve SLT operates the regulator valve 10 by regulating the modulator pressure Pmod based on the throttle opening degree. Thus, the regulator valve 10 regulates the pressure as the line pressure PL based on the throttle opening degree as described above.

The circulation modulator valve 12 is a spool valve, and regulates a circulation modulator pressure for ATF circulation by using the line pressure PL as a source pressure. The circulation modulator valve 12 includes a port 12a that outputs the circulation modulator pressure, and a port 12b (see FIG. 3) to which the line pressure PL is input.

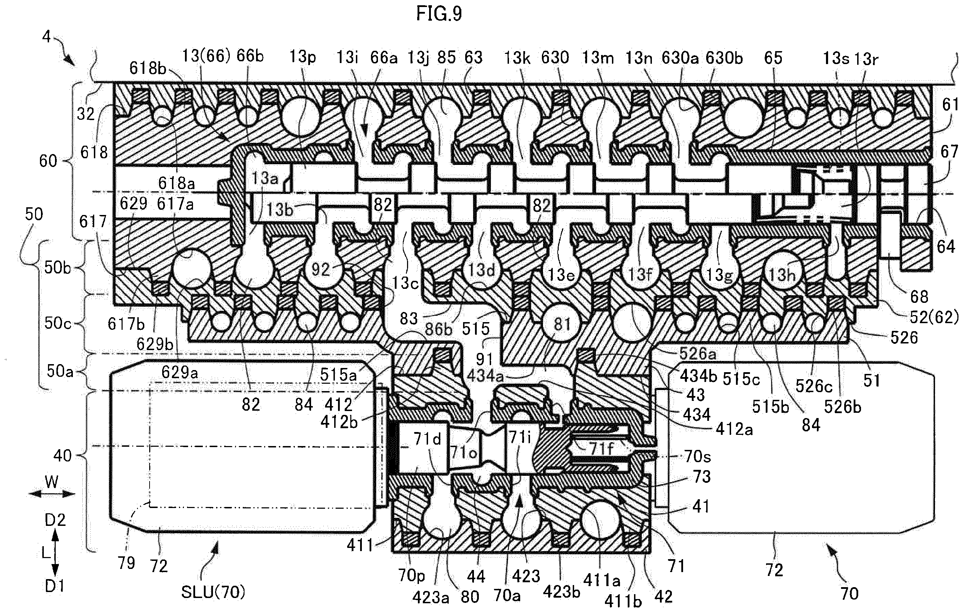

The L/U relay valve 13 is a spool valve including a spool 13p and an urging spring 13s serving as an urging member (see FIG. 9). The L/U relay valve 13 switches a hydraulic pressure such that the spool 13p moves based on a relationship between a signal pressure supplied from the ON/OFF solenoid valve 79a and an urging force of the urging spring 13s. The L/U relay valve 13 controls an engagement state of the lock-up clutch 35 through the supply of a hydraulic pressure from the linear solenoid valve SLU. The L/U relay valve 13 includes a first oil chamber (hydraulic oil chamber) 13a for applying a pressing force in a direction in which the spool 13p is switched based on the signal pressure, drain ports 13b, 13d, and 13k, a port 13c to which the pressure supplied from the linear solenoid valve SLU is input, a port 13e to which oil is input from the torque converter 34, a port 13f to which the secondary pressure Psec is input, a port 13g to which the circulation modulator pressure is input, a port 13i that supplies a hydraulic pressure for engaging the lock-up clutch 35, a port 13j that communicates with the sequence valve 14, a port 13m that supplies oil to a cooler 7, a port 13n that supplies oil to the torque converter 34, and a second oil chamber 13r for locking the spool 13p.

The sequence valve 14 is a spool valve, and switches a hydraulic pressure such that a spool moves through detection of failure. The sequence valve 14 includes a port 14a to which an output from the linear solenoid valve SL6 is supplied, a port 14b that communicates with the hydraulic servomechanism of the second brake B2, and a port 14c that communicates with the L/U relay valve 13. A forward range pressure is input to the clutch control valve 16, and the clutch control valve 16 generates a limp home pressure P₁ serving as a source pressure in an all-off failure state via the sequence valve 14.

For example, the manual valve generates a forward range pressure PD and a reverse range pressure PR by using the line pressure PL as a source pressure. The linear solenoid valves SL1 to SL6 engage or disengage the clutches C1 to C4 and the brakes B1 and B2 by regulating the hydraulic pressures and supplying or releasing the hydraulic pressures to or from the hydraulic servomechanisms of the clutches C1 to C4 and the brakes B1 and B2. The linear solenoid valves SL1, SL2, and SL5 use the forward range pressure PD as a source pressure, the linear solenoid valves SL3 and SL4 use the reverse range pressure PR as a source pressure, and the linear solenoid valve SL6 uses the line pressure PL as a source pressure.

The ON/OFF solenoid valve 79a supplies or releases the signal pressure to or from the L/U relay valve 13 by supplying or interrupting the supply of the supplied modulator pressure Pmod based on an electric signal from the ECU 5.

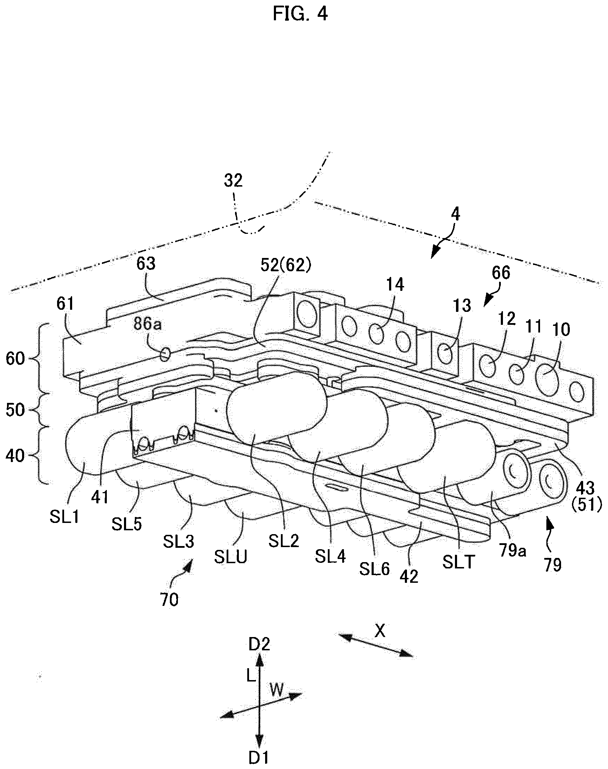

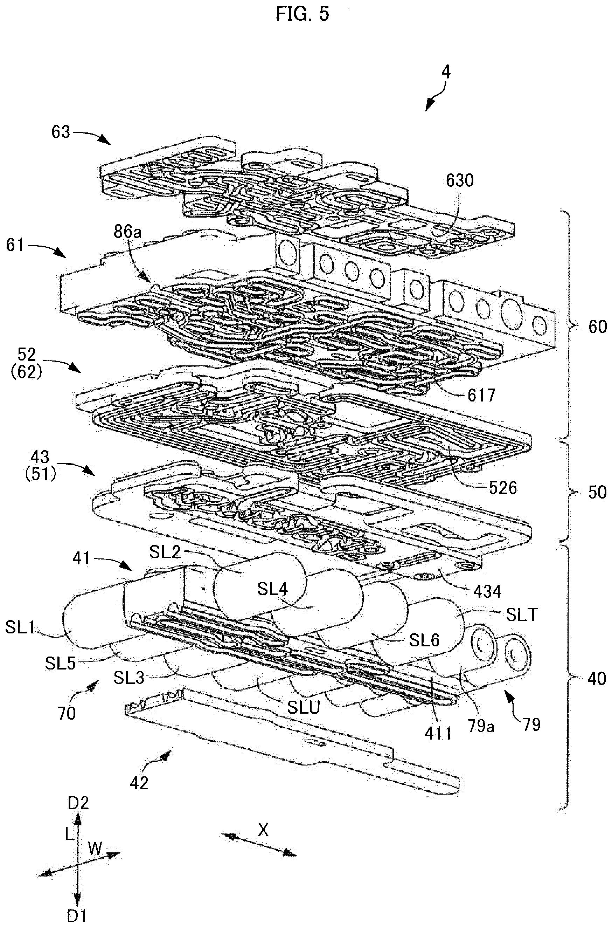

Next, the structure of the valve body of the hydraulic controller 4 described above is described in detail. As illustrated in FIG. 4 and FIG. 5, the hydraulic controller 4 is a valve body, and is formed by stacking a solenoid arrangement portion (first layer) 40 that houses pressure regulating units 71 (see FIG. 9) of linear solenoid valves (solenoid valves) 70 and ON/OFF solenoid valves (solenoid valves) 79, a valve arrangement portion (second layer) 60 that houses valves such as selector valves 66, and an oil passage arrangement portion (third layer) 50 interposed between the solenoid arrangement portion 40 and the valve arrangement portion 60. In this embodiment, a stacking direction L is defined as a vertical direction, and the valve arrangement portion 60 is attached to the transmission case 32 while the solenoid arrangement portion 40 is oriented downward (in a first direction D1) and the valve arrangement portion 60 is oriented upward (in a second direction D2). That is, in the stacking direction L, a direction from the oil passage arrangement portion 50 to the solenoid arrangement portion 40 is defined as the first direction D1, and a direction opposite to the first direction D1 is defined as the second direction D2.

In this embodiment, for example, the linear solenoid valves SLU, SLT, and SL1 to SL6 are provided as the linear solenoid valves 70, and the structures are different from each other. Parts common to the linear solenoid valves SLU, SLT, and SL1 to SL6 are collectively described as those of the linear solenoid valves 70. In this embodiment, for example, the regulator valve 10, the solenoid modulator valve 11, the lock-up relay valve 13, and the sequence valve 14 are provided as the selector valves 66, and the structures are different from each other. Parts common to the valves 10 to 14 are collectively described as those of the selector valves 66.

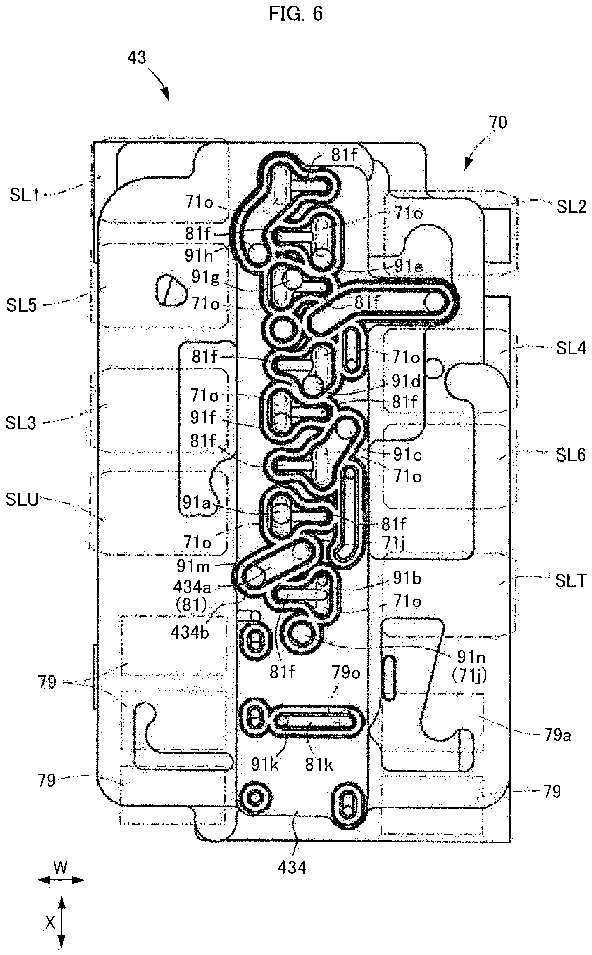

As illustrated in FIG. 4, FIG. 5, and FIG. 9, the solenoid arrangement portion 40 includes three-layer substantially plate-shaped synthetic resin blocks that are a first block (stack) 41, a second block 42, and a third block (stack) 43 (see FIG. 6). The three layers are stacked in the order of the third block 43, the first block 41, and the second block 42 from the oil passage arrangement portion 50, and are integrated by, for example, injection molding.

The first block 41 is arranged at the center of the three layers that structure the solenoid arrangement portion 40. A plurality of holes 44 are formed so as to extend inward alternately from one side end of the first block 41 in a direction orthogonal to the stacking direction L and from the other side end opposite to the one side end. In this embodiment, the first block 41 is formed by insert molding of bottomed cylindrical metal sleeves 73 in primary injection molding of a DSI method. The inside of the sleeve 73 is the hole 44. In this embodiment, a direction in which the hole 44 is formed is defined as a width direction W. A direction orthogonal to the width direction W and the stacking direction L, in which the holes 44 are arrayed, is defined as an arraying direction X.

The linear solenoid valve 70 or the ON/OFF solenoid valve 79 is provided in each sleeve 73. The linear solenoid valve 70 and the ON/OFF solenoid valve 79 are provided such that their central lines are arranged in parallel within the same plane. The linear solenoid valve SLU is described as an example of the linear solenoid valve 70. The linear solenoid valve 70 includes the pressure regulating unit 71 housed in the sleeve 73 and configured to regulate a hydraulic pressure by a spool 70p, and a solenoid unit 72 configured to drive the pressure regulating unit 71 in response to an electric signal. The pressure regulating unit 71 includes the slidable spool 70p configured to regulate the hydraulic pressure, and an urging spring 70s that is a compression coil spring configured to press the spool 70p in one direction.

Ports having an elongated hole shape along a circumferential direction are formed on the peripheral side surface of each sleeve 73. In this embodiment, the sleeve 73 is provided with four ports that are an input port 71i, an output port 71o, a feedback port 71f, and a drain port 71d. The pressure regulating unit 71 regulates a hydraulic pressure input to the input port 71i by the spool 70p, and outputs the hydraulic pressure from the output port 71o. The linear solenoid valve 70 is a normally-closed type linear solenoid valve that is opened when energized. Therefore, the direction in which the urging spring 70s urges the spool 70p is the same as a direction in which a hydraulic pressure fed back into the pressure regulating unit 71 from the feedback port 71f presses the spool 70p, and the ports of the linear solenoid valve 70 are arranged in the order of the drain port 71d, the output port 71o, the input port 71i, and the feedback port 71f from the solenoid unit 72 side.

The input port 71i is provided while being oriented to the second block 42, and the source pressure such as the line pressure PL, the modulator pressure Pmod, or the forward range pressure Pd is input to the input port 71i. The output port 71o is provided while being oriented to the third block 43, and generates an output pressure in response to an electric signal based on the hydraulic pressure input to the input port 71i. In this embodiment, the input port 71i is arranged between the output port 71o and the feedback port 71f in an axial direction of the pressure regulating unit 71. In this embodiment, the ports of the linear solenoid valve 70 are arranged so that the hydraulic pressure is supplied from the second block 42 side and is output from the third block 43 side. As a matter of course, the present invention is not limited to this case. In this embodiment, the four ports 71i, 71o, 71f, and 71d are provided as the ports of the linear solenoid valve 70, but are collectively described as ports 70a for common structures such as states of communication of the ports 71i, 71o, 71f, and 71d with other oil passages.

In this embodiment, the solenoid valves are the linear solenoid valves 70 and the ON/OFF solenoid valves 79 configured to generate output pressures in response to electric signals based on input hydraulic pressures. The ON/OFF solenoid valve 79 switches between the supply of the output pressure and the stop of the supply in response to an electric signal. The linear solenoid valves 70 and the ON/OFF solenoid valves 79 are arranged adjacently in parallel along a direction intersecting, for example, orthogonal to the stacking direction L. In particular, the same source pressures are supplied to the ON/OFF solenoid valves 79, and therefore the ON/OFF solenoid valves 79 are arranged collectively. Thus, the input ports of the linear solenoid valves 70 and the ON/OFF solenoid valves 79 can be arranged close to each other. Accordingly, a short input-side oil passage can be arranged linearly.

The first block 41 has a first surface 411 provided on the first direction D1 side, a plurality of grooves 411a that are formed on the first surface 411 and have a semicircular shape in cross section, and protrusions 411b formed on the first surface 411. The plurality of grooves 411a communicate with some ports 70a out of the plurality of ports of the linear solenoid valves 70 or the ON/OFF solenoid valves 79. The protrusions 411b protrude toward the second block 42. Further, the first block 41 has a second surface 412 provided on the second direction D2 side, a plurality of grooves 412a that are formed on the second surface 412 and have a semicircular shape in cross section, and protrusions 412b formed on the second surface 412. The plurality of grooves 412a communicate with some ports 70a out of the plurality of ports of the linear solenoid valves 70 or the ON/OFF solenoid valves 79. The protrusions 412b protrude toward the third block 43. Further, the first block 41 has the plurality of holes 44 that are formed between the first surface 411 and the second surface 412 along the first surface 411 and the second surface 412 and house the pressure regulating units 71.

The second block 42 has a third surface 423 provided so as to face the first surface 411 of the first block 41, a plurality of grooves 423a that are formed on the third surface 423 and have a semicircular shape in cross section, and recesses 423b formed on the third surface 423. The plurality of grooves 423a are provided so as to face the plurality of grooves 411a. The third surface 423 is stacked so as to face the first surface 411 of the first block 41, thereby forming a plurality of oil passages 80 between the plurality of grooves 411a and the plurality of grooves 423a. The recesses 423b are recessed in the same direction as the direction in which the protrusions 411b on the first surface 411 protrude, and the protrusions 411b are fitted to the recesses 423b in the stacking direction L with clearances therebetween. The first block 41 and the second block 42 are stacked by fitting the protrusion 411b to the recess 423b between adjacent oil passages 80, and are integrated by injection molding while the clearance between the protrusion 411b and the recess 423b is defined as a cavity.

The third block 43 is stacked on the opposite side of the first block 41 from the second block 42. The third block 43 has a fourth surface 434 that faces the second surface 412 of the first block 41, a plurality of grooves 434a that are formed on the fourth surface 434 and have a semicircular shape in cross section, and recesses 434b formed on the fourth surface 434 (see FIG. 6). The plurality of grooves 434a are provided so as to face the plurality of grooves 412a. The fourth surface 434 is stacked so as to face the second surface 412 of the first block 41, thereby forming a plurality of first oil passages 81 between the plurality of grooves 412a and the plurality of grooves 434a. The recesses 434b are recessed in the same direction as the direction in which the protrusions 412b on the second surface 412 protrude, and the protrusions 412b are fitted to the recesses 434b in the stacking direction L with clearances therebetween. The first block 41 and the third block 43 are stacked by fitting the protrusion 412b to the recess 434b between adjacent first oil passages 81, and are integrated by injection molding while the clearance between the protrusion 412b and the recess 434b is defined as a cavity.

The first oil passages 81 formed by the first block 41 and the third block 43 communicate with the valve arrangement portion 60 via the oil passage arrangement portion 50, or communicate the ports 70a of the linear solenoid valves 70 with each other and the ports of the ON/OFF solenoid valves 79 with each other. For example, the first oil passage 81 communicates the output port 71o and the feedback port 71f of the linear solenoid valve 70 with each other. Therefore, feedback is executed by supplying hydraulic oil output from the output port 71o to the feedback port 71f. The oil passages 80 formed by the first block 41 and the second block 42 communicate the ports 70a of the linear solenoid valves 70 with each other and the ports of the ON/OFF solenoid valves 79 with each other. Further, the oil passages 80 communicate with various source pressure supply units to supply the source pressures such as the line pressure and the modulator pressure to the linear solenoid valves 70 and the ON/OFF solenoid valves 79.

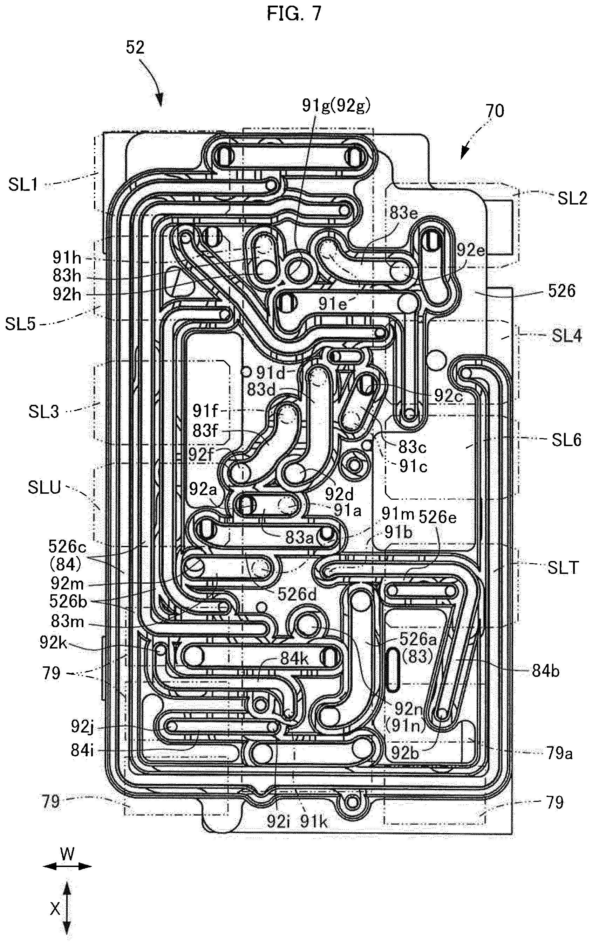

The oil passage arrangement portion 50 includes two-layer substantially plate-shaped synthetic resin blocks that are a fourth block (stack) 51 and a fifth block (stack) 52 (see FIG. 7). The two layers are stacked and integrated by, for example, injection molding. In this embodiment, the fourth block 51 is arranged on the second direction D2 side of the third block 43, and the fourth block 51 and the third block 43 are structured by a single member. The fourth block 51 and the third block 43 need not be structured by a single member, but may be formed by separate members and integrated by injection molding, bonding, welding, or the like.

The fourth block 51 has a fifth surface 515 provided on the second direction D2 side, a plurality of large-diameter grooves 515a and a plurality of small-diameter grooves 515c that are formed on the fifth surface 515 and have a semicircular shape in cross section, and protrusions (first joining portions) 515b formed on the fifth surface 515. The protrusions 515b protrude in the second direction D2, and are arranged on the fifth surface 515 so as to surround the plurality of grooves 515a and 515c. The plurality of large-diameter grooves 515a are arranged so as to overlap the pressure regulating units 71 of the linear solenoid valves 70 when viewed in the stacking direction L. The plurality of small-diameter grooves 515c are arranged so as to overlap the solenoid units 72 of the linear solenoid valves 70 when viewed in the stacking direction L. That is, the fifth block 52 has the fifth surface 515, the plurality of grooves 515a and 515c formed on the fifth surface 515, and the protrusions 515b that are formed on the fifth surface 515 and surround the plurality of grooves 515a and 515c.

As illustrated in FIG. 7 and FIG. 9, the fifth block 52 has a sixth surface 526 provided so as to face the fifth surface 515 of the fourth block 51, a plurality of large-diameter grooves 526a and a plurality of small-diameter grooves 526c that are formed on the sixth surface 526 and have a semicircular shape in cross section, and recesses (second joining portions) 526b formed on the sixth surface 526. The plurality of large-diameter grooves 526a are provided so as to face the plurality of large-diameter grooves 515a. The plurality of small-diameter grooves 526c are provided so as to face the plurality of small-diameter grooves 515c. The sixth surface 526 is stacked so as to face the joining surface 515 of the fourth block 51, thereby forming a plurality of large-diameter oil passages (third oil passages) 83 between the plurality of large-diameter grooves 526a and the plurality of large-diameter grooves 515a, and also forming a plurality of small-diameter oil passages (third oil passages) 84 between the plurality of small-diameter grooves 526c and the plurality of small-diameter grooves 515c. The recesses 526b are recessed in the same direction as the direction in which the protrusions 515b on the fifth surface 515 protrude, and the protrusions 515b are fitted to the recesses 526b in the stacking direction L with clearances therebetween. That is, the recesses 526b are arranged on the sixth surface 526 so as to surround the plurality of grooves 526a and 526c. The fourth block 51 and the fifth block 52 are stacked by fitting the protrusion 515b to the recess 526b between adjacent oil passages 83 and 84, and are integrated by injection molding while the clearance between the protrusion 515b and the recess 526b is defined as a cavity.

That is, the fifth block 52 has the sixth surface 526 provided so as to face the fifth surface 515, the plurality of grooves 526a and 526c provided so as to face the plurality of grooves 515a and 515c, and the recesses 526b joined to the protrusions 515b so as to face the protrusions 515b. The sixth surface 526 of the fifth block 52 is stacked in close contact with the fifth surface 515, thereby achieving a state in which the oil passages 83 and 84 are formed between the plurality of grooves 515a and 515c and the plurality of grooves 526a and 526c. The protrusions 515b and the recesses 526b are joined to each other, thereby achieving a state in which the oil passages 83 and 84 located within both of the fifth surface 515 and the sixth surface 526 are surrounded and sealed.

As illustrated in FIG. 9, the oil passage arrangement portion 50 includes a first oil passage layer (first region) 50a provided on the solenoid arrangement portion 40 side, a second oil passage layer (second region) 50b provided on the valve arrangement portion 60 side, and a third oil passage layer (third region) 50c provided between the first oil passage layer 50a and the second oil passage layer 50b by stacking the first oil passage layer 50a, the second oil passage layer 50b, and the third oil passage layer 50c in the stacking direction L. The first oil passage layer 50a houses the first oil passages 81 and a plurality of communication oil passages 91 that communicate along the stacking direction L from the ports 70a of the linear solenoid valves 70 and the ports of the ON/OFF solenoid valves 79 to the third oil passage layer 50c. The first oil passage layer 50a is also included in the solenoid arrangement portion 40. The second oil passage layer 50b houses second oil passages 82 and a plurality of communication oil passages 92 that communicate along the stacking direction L from ports 66a of the selector valves 66 to the third oil passage layer 50c. The second oil passage layer 50b is also included in the valve arrangement portion 60. The third oil passage layer 50c houses the plurality of large-diameter oil passages 83 and small-diameter oil passages 84 that communicate the first oil passages 81 and the second oil passages 82 with each other and are provided at least partly in directions intersecting the stacking direction L. In this embodiment, the third oil passage layer 50c houses only a single layer of the oil passages 83 and 84, but the present invention is not limited to this case. The third oil passage layer 50c may house a plurality of layers.

That is, the oil passage arrangement portion 50 includes the first oil passages 81 that communicate two ports of the plurality of solenoid valves 70 and 79 having the plurality of ports with each other, the second oil passages 82 that communicate two ports of the plurality of valves 66 having the plurality of ports with each other, and the third oil passages 83 and 84 provided in the third oil passage layer 50c provided in an overlapping manner between the first oil passage layer 50a in which the first oil passages 81 are arranged and the second oil passage layer 50b in which the second oil passages 82 are arranged, the third oil passages 83 and 84 being orthogonal to the stacking direction L that is an overlapping direction of the first oil passage layer 50a and the second oil passage layer 50b. The third oil passages 83 and 84 communicate any one port out of the ports of the solenoid valves 70 and 79 and any one port out of the ports of the valves 66 with each other.

The direction intersecting the stacking direction L, in which the large-diameter oil passages 83 and the small-diameter oil passages 84 are provided, includes a direction orthogonal to the stacking direction L and a direction inclined with respect to the stacking direction L. Each of the oil passages 83 and 84 may have a part provided in a direction along the stacking direction L. In this embodiment, the sectional shape of each of the large-diameter oil passages 83 and the small-diameter oil passages 84 is a substantially circular shape. The substantially circular shape includes not only a perfect round shape, but also an elliptical shape or other shapes in which the cross section of each of the oil passages 83 and 84 is continuously curved. The oil passage arrangement portion 50 has a stacking structure formed by integral molding of a synthetic resin.

As illustrated in FIG. 6, FIG. 7, and FIG. 9, each of the oil passages 83 and 84 is capable of causing hydraulic oil to flow in a direction orthogonal to the stacking direction L within, for example, the joining surface (515, 526) between the fourth block 51 and the fifth block 52. The third block 43 and the fourth block 51 are provided with the communication oil passages 91 that communicate the first oil passages 81 and the large-diameter oil passages 83 or the small-diameter oil passages 84 with each other in the stacking direction L. Thus, the hydraulic oil can be caused to flow between the fifth surface 515 of the fourth block 51 and the fourth surface 434 of the third block 43. Further, each of the oil passages 83 and 84 communicates, for example, two of the hydraulic servomechanisms of the clutches and the brakes, the ports 70a of the linear solenoid valves 70, and the input ports 66a of the selector valves 66.

In this embodiment, the first joining portion is the protrusion 515b that protrudes toward the second joining portion, and the second joining portion is the recess 526b to which the protrusion 515b is fitted and which is recessed in the same direction as the direction in which the protrusion 515b protrudes. The height of the protrusion 515b is smaller than the depth of the recess 526b. A space between the distal end surface of the protrusion 515b and the bottom surface of the recess 526b is filled with a sealing member. The sealing member achieves a state in which the protrusion 515b and the recess 526b are joined to each other. Further, the sealing member is an injection molding material, and the protrusion 515b and the recess 526b are joined to each other by injection molding.

In this embodiment, as illustrated in FIG. 7, adjacent recesses 526b formed on the sixth surface 526 are unified at a position where two large-diameter oil passages 83 are arranged adjacent to each other (for example, a recess 526d in FIG. 7). Similarly, adjacent recesses 526b formed on the sixth surface 526 are unified at a position where two small-diameter oil passages 84 are arranged adjacent to each other (for example, a recess 526e in FIG. 7). Adjacent protrusions 515b formed on the fifth surface 515 are also unified along with the unification of the recesses 526b. Thus, the number of arrangement positions can be minimized through the unification of the protrusions 515b and the recesses 526b. Accordingly, the structure of the valve body can be simplified, and downsizing can be achieved.

The plurality of large-diameter grooves 515a and large-diameter grooves 526a are arranged so as to overlap the pressure regulating units 71 of the linear solenoid valves 70 when viewed in the stacking direction L, and the plurality of small-diameter grooves 515c and small-diameter grooves 526c are arranged so as to overlap the solenoid units 72 of the linear solenoid valves 70 when viewed in the stacking direction L. Therefore, the oil passage arrangement portion 50 is stacked on the solenoid arrangement portion 40 in the stacking direction L that is a direction intersecting a direction of a central line of the spool 70p, and includes the plurality of oil passages 83 and 84 including the large-diameter oil passages 83 and the small-diameter oil passages 84 having diameters smaller than those of the large-diameter oil passages 83. In this embodiment, the stacking direction L is orthogonal to the direction of the central line of the spool 70p.

In this embodiment, the solenoid units 72 of the linear solenoid valves 70 are arranged so as to overlap the small-diameter oil passages 84 of the oil passage arrangement portion 50 but not to overlap the large-diameter oil passages 83 of the oil passage arrangement portion 50 when viewed in the stacking direction L. The pressure regulating units 71 of the linear solenoid valves 70 are arranged so as to overlap the large-diameter oil passages 83 of the oil passage arrangement portion 50 when viewed in the stacking direction L. The solenoid units of the ON/OFF solenoid valves 79 are arranged so as to overlap the large-diameter oil passages 83 of the oil passage arrangement portion 50 when viewed in the stacking direction L. The solenoid units of the ON/OFF solenoid valves 79 have diameters smaller than those of the solenoid units 72 of the linear solenoid valves 70, and do not therefore interfere with the large-diameter oil passages 83 of the oil passage arrangement portion 50. The large-diameter oil passage 83 is used for causing hydraulic oil to flow at a high flow rate so as to generate, for example, the line pressure, the range pressure, or a hydraulic pressure for controlling a friction engagement element. The small-diameter oil passage 84 is used for causing hydraulic oil to flow at a low flow rate so as to generate, for example, the signal pressure of the selector valve 66.

Among the small-diameter oil passages 84 provided in the oil passage arrangement portion 50, the small-diameter oil passages 84 arranged so as to overlap the solenoid units 72 when viewed in the stacking direction L are arranged in the vicinity of the side surface of the oil passage arrangement portion 50 on the solenoid unit 72 side. That is, the small-diameter oil passages 84 are arranged immediately above (or immediately below) the solenoid units 72. Therefore, the oil passage arrangement portion 50 can be made as thin as possible. Thus, an increase in the thickness of the valve body can be suppressed. The large-diameter oil passages 83 having diameters larger than those of the small-diameter oil passages 84 are arranged farther away from the solenoid units 72 toward the small-diameter oil passages 84 as compared to the small-diameter oil passages 84. Therefore, the degree of freedom in terms of arrangement of the oil passages can also be secured while downsizing the valve body.

As illustrated in FIG. 4, FIG. 5, FIG. 8, and FIG. 9, the valve arrangement portion 60 includes three-layer substantially plate-shaped synthetic resin blocks that are a sixth block (stack) 61, a seventh block (stack) 62, and an eighth block 63. The three layers are stacked and integrated by, for example, injection molding. The valve arrangement portion 60 is stacked on the opposite side of the oil passage arrangement portion 50 from the solenoid arrangement portion 40 in the stacking direction L, and houses the selector valves 66. In this embodiment, the seventh block 62 is arranged on the second direction D2 side of the fifth block 52, and the seventh block 62 and the fifth block 52 are structured by a single member. The seventh block 62 and the fifth block 52 need not be structured by a single member, but may be formed by separate members and integrated by injection molding, bonding, welding, or the like. The L/U relay valve 13 is described as an example of the selector valve 66.

The sixth block 61 is arranged at the center of the three layers that structure the valve arrangement portion 60. A plurality of holes 64 are formed so as to extend inward from one side end of the sixth block 61 in a direction orthogonal to the stacking direction L and from the other side end opposite to the one side end. In this embodiment, the sixth block 61 is formed by insert molding of bottomed cylindrical metal sleeves 65 in the primary injection molding of the DSI method. The inside of the sleeve 65 is the hole 64.

As illustrated in FIG. 9, the L/U relay valve 13 is formed in the sleeve 65 as an example of the selector valve 66 that is a spool valve. The sleeve 65 houses the slidable spool 13p, the urging spring (urging member) 13s that is a compression coil spring configured to press the spool 13p in one direction, and a stopper 67 configured to keep a state in which the urging spring 13s presses the spool 13p. The L/U relay valve 13 is formed by those components. The stopper 67 is fixed to the vicinity of the opening of the sleeve 65 with a fastener 68. The ports 13b to 13n that are a large number of through holes are formed on the peripheral side surface of each sleeve 65. Each of the ports 13b to 13n is formed substantially over the entire circumference, and a part other than the opening is closed by the synthetic resin that structures the sixth block 61. For example, the L/U relay valve 13 is capable of switching oil passages. The L/U relay valve 13 capable of switching oil passages is a spool valve including the movable spool 13p, the urging spring 13s configured to urge the spool 13p in one direction, and the first oil chamber 13a for moving the spool 13p in a direction in which the spool 13p repels the urging spring 13s by a supplied hydraulic pressure.

The L/U relay valve 13 includes the first oil chamber 13a for moving the spool 13p by the supplied hydraulic pressure. The first oil chamber 13a is arranged at the end on the opposite side of the L/U relay valve 13 from the urging spring 13s. In FIG. 9, the output port 71o of the linear solenoid valve SLU communicates with the port 13c of the L/U relay valve 13 via the oil passages 81, 91, 83, 92, and 82. For example, the output port 71o and the first oil chamber 13a may communicate with each other by extending the oil passage 83 in the width direction W and communicating the oil passage 83 with the first oil chamber 13a. With this structure, the increase in the size of the valve body can be suppressed while the linear solenoid valve SLU and the L/U relay valve 13 communicate with each other without an offset in the width direction W orthogonal to the stacking direction L.

As illustrated in FIG. 10, the regulator valve 10 is formed in another sleeve 65 as an example of a pressure regulating valve that is a spool valve. Each sleeve 65 houses the slidable spool 10p, the urging spring (urging member) 10s that is a compression coil spring configured to press the spool 10p in one direction, and the stopper 67 configured to keep a state in which the urging spring 10s presses the spool 10p. The regulator valve 10 is formed by those components. For example, the regulator valve 10 is capable of regulating a hydraulic pressure. The regulator valve 10 includes a hydraulic oil chamber 10r for moving the spool 10p by a supplied hydraulic pressure. The hydraulic oil chamber 10r is an urging member housing chamber that houses the urging spring 10s. With this structure, the increase in the size of the valve body can be suppressed while the linear solenoid valve SLT and the regulator valve 10 communicate with each other without an offset in the width direction W orthogonal to the stacking direction L.

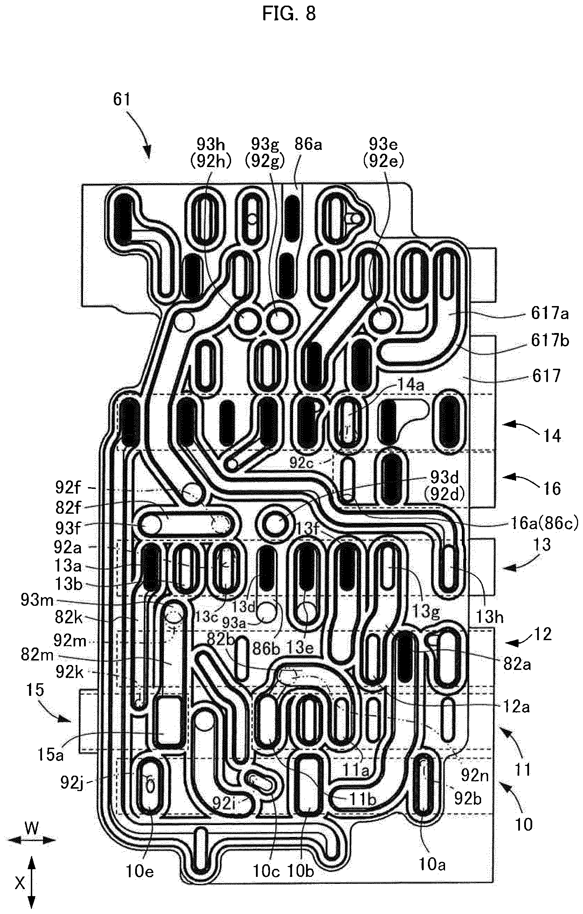

The sixth block 61 has a seventh surface 617, a plurality of grooves 617a that are formed on the seventh surface 617 and have a semicircular shape in cross section, and protrusions (fourth joining portions) 617b formed on the seventh surface 617 (see FIG. 8). The plurality of grooves 617a communicate with some ports 66a out of the plurality of ports of the selector valves 66. The protrusions 617b are formed between adjacent grooves 617a on the seventh surface 617, and protrude toward the seventh block 62. Further, the sixth block 61 has an eighth surface 618 on the opposite side from the seventh surface 617, a plurality of grooves 618a that are formed on the eighth surface 618 and have a semicircular shape in cross section, and protrusions 618b formed on the eighth surface 618. The plurality of grooves 618a communicate with some ports 66a out of the plurality of ports of the selector valves 66. The protrusions 618b are formed between adjacent grooves 618a on the eighth surface 618, and protrude toward the eighth block 63. Further, the sixth block 61 has the plurality of holes 64 that are formed between the seventh surface 617 and the eighth surface 618 along the seventh surface 617 and the eighth surface 618 and house the selector valves 66.

The seventh block 62 is stacked on the opposite side of the sixth block 61 from the transmission case 32. The seventh block 62 has a ninth surface 629, a plurality of grooves 629a that are formed on the ninth surface 629 and have a semicircular shape in cross section, and recesses (third joining portions) 629b formed on the ninth surface 629. The plurality of grooves 629a are provided so as to face the plurality of grooves 617a. The ninth surface 629 is stacked in the stacking direction L so as to face the seventh surface 617 of the sixth block 61, thereby forming the plurality of second oil passages 82 between the plurality of seventh grooves 617a and the plurality of grooves 629a. The oil passages 83 and 84 and the second oil passages 82 communicate with each other in a direction intersecting, for example, orthogonal to the facing surfaces such as the seventh surface 617 and the ninth surface 629.

The recesses 629b are recessed in the same direction as the direction in which the protrusions 617b on the seventh surface 617 protrude, and the protrusions 617b are fitted to the recesses 629b in the stacking direction L with clearances therebetween. In this embodiment, the sixth block 61 and the seventh block 62 are stacked by fitting the protrusion 617b to the recess 629b between adjacent second oil passages 82, and are integrated by injection molding while the clearance between the protrusion 617b and the recess 629b is defined as a cavity and an injection molding material is injected into the clearance.

The eighth block 63 is stacked on the opposite side of the sixth block 61 from the seventh block 62, and is attached to the transmission case 32. The eighth block 63 has a tenth surface 630, a plurality of grooves 630a that are formed on the tenth surface 630 and have a semicircular shape in cross section, and recesses 630b formed on the tenth surface 630. The plurality of grooves 630a are provided so as to face the plurality of grooves 618a. The tenth surface 630 is stacked so as to face the eighth surface 618 of the sixth block 61, thereby forming a plurality of oil passages 85 between the plurality of grooves 630a and the plurality of grooves 618a.

The recesses 630b are recessed in the same direction as the direction in which the protrusions 618b on the eighth surface 618 protrude, and the protrusions 618b are fitted to the recesses 630b in the stacking direction L with clearances therebetween. The sixth block 61 and the eighth block 63 are stacked by fitting the protrusion 618b to the recess 630b between adjacent oil passages 85, and are integrated by injection molding while the clearance between the protrusion 618b and the recess 630b is defined as a cavity.

As illustrated in FIG. 7 to FIG. 9, the fifth block 52 and the seventh block 62 are provided with the communication oil passages 92 that communicate the second oil passages 82 and the large-diameter oil passages 83 or the small-diameter oil passages 84 with each other in the stacking direction L. Thus, the hydraulic oil can be caused to flow between the sixth surface 526 of the fifth block 52 and the ninth surface 629 of the seventh block 62.

In this embodiment, drain oil passages (second oil passages) 86a, 86b, and 86c are provided between, for example, the sixth block 61 and the seventh block 62. The drain oil passages 86a, 86b, and 86c are formed within both of the seventh surface 617 and the ninth surface 629 by the grooves 617a formed on the seventh surface 617 and the grooves 629a formed on the ninth surface 629, and communicate with the outside of the sixth block 61 and the seventh block 62 to drain hydraulic oil. No joining portions are provided around the drain oil passages 86a, 86b, and 86c. That is, the joining portions do not surround the drain oil passages 86a, 86b, and 86c. The oil flowing through the drain oil passages 86a, 86b, and 86c has a relatively low pressure, and does not easily leak from the drain oil passages 86a, 86b, and 86c to a space between the seventh surface 617 and the ninth surface 629. Even if the oil leaks from the drain oil passages 86a, 86b, and 86c to the space between the seventh surface 617 and the ninth surface 629, the influence is small. Therefore, the joining portions can be omitted. Thus, the number of arrangement positions of the joining portions can be minimized. Accordingly, the structure of the valve body can be simplified, and downsizing can be achieved. The drain oil passages 86a, 86b, and 86c are illustrated only between the sixth block 61 and the seventh block 62, but communicate with other blocks in actuality, and no joining portions are provided around the other blocks.

Among the oil passages 82 and 85 that communicate with the selector valves 66 in the valve arrangement portion 60, for example, large-diameter oil passages that cause hydraulic oil to flow at a high flow rate communicate with other selector valves 66 in the valve arrangement portion 60, communicate with other selector valves 66 of the valve arrangement portion 60 via the large-diameter oil passages 83 of the oil passage arrangement portion 50, or communicate with the linear solenoid valves 70 or the ON/OFF solenoid valves 79 of the solenoid arrangement portion 40 via the large-diameter oil passages 83 of the oil passage arrangement portion 50. Among the oil passages 82 and 85 that communicate with the selector valves 66 in the valve arrangement portion 60, for example, small-diameter oil passages that cause hydraulic oil to flow at a low flow rate communicate with other selector valves 66 in the valve arrangement portion 60, communicate with other selector valves 66 of the valve arrangement portion 60 via the small-diameter oil passages 84 of the oil passage arrangement portion 50, or communicate with the ON/OFF solenoid valves 79 of the solenoid arrangement portion 40 via the small-diameter oil passages 84 of the oil passage arrangement portion 50. That is, at least a part of the oil passages 83 and 84 of the oil passage arrangement portion 50 communicates the linear solenoid valve 70 of the solenoid arrangement portion 40 and the selector valve 66 of the valve arrangement portion 60 with each other.

The above description is directed to the state in which the protrusions 515b formed on the fifth surface 515 and the recesses 526b formed on the sixth surface 526 are joined to each other to surround and seal the oil passages 83 and 84 located within both of the fifth surface 515 and the sixth surface 526. This structure is not limited to the protrusions 515b and the recesses 526b. That is, the protrusions and the recesses on the other surfaces are similarly provided so as to surround adjacent oil passages. Thus, the oil passages can be sealed by joining the protrusions and the recesses to each other. In this embodiment, the protrusions 411b and the recesses 423b are joined to each other to surround and seal the oil passages 80. The protrusions 412b and the recesses 434b are joined to each other to surround and seal the first oil passages 81. The protrusions 617b and the recesses 629b are joined to each other to surround and seal the second oil passages 82. The protrusions 618b and the recesses 630b are joined to each other to surround and seal the oil passages 85.

In this embodiment, for example, as illustrated in FIG. 9, in the pressure regulating unit 71 that houses the spool 70p, the output port 71o of the linear solenoid valve 70 is arranged at a central part in the movement direction of the spool 70p. In the L/U relay valve 13, the hydraulic oil chamber 13a for moving the spool 13p by the supplied hydraulic pressure is arranged at the end of the L/U relay valve 13. Therefore, when an attempt is made to minimize the length of the oil passage that communicates the output port 71o of the linear solenoid valve 70 and the hydraulic oil chamber 13a of the L/U relay valve 13 with each other, the offset between the linear solenoid valve 70 and the L/U relay valve 13 in the width direction W orthogonal to the stacking direction L increases. As a result, the size of the valve body increases. In this embodiment, the oil passage is provided orthogonally to the stacking direction L. Therefore, the increase in the size of the valve body can be suppressed while the linear solenoid valve 70 and the L/U relay valve 13 communicate with each other without the offset in the width direction W orthogonal to the stacking direction L. Although the L/U relay valve 13 is described as an example, the same applies to the other selector valves 66.

In this embodiment, the valve body of the hydraulic controller 4 for the automatic transmission 3 described above is manufactured by the DSI method. Therefore, when the valve body of the hydraulic controller 4 is manufactured, each of the first block 41 to the eighth block 63 is formed by injection molding, and the dies that face each other are relatively moved without ejecting the blocks from the mold. Through the die slide, some of the layers are stacked by fitting the protrusions to the recesses, and injection molding is performed by injecting a synthetic resin into the cavities. Thus, the stacked layers are integrated. The die slide and the stacking are performed on all the joining surfaces of the first block 41 to the eighth block 63 to form the valve body. In this embodiment, the sealing member for integrating the stacked blocks is the injection molding material, but the present invention is not limited to this case. For example, the sealing member may be an adhesive. That is, the protrusions and the recesses of the respective layers may be integrated by bonding. In this case, the valve body can be assembled at low cost.

Next, an operation of the hydraulic controller 4 for the automatic transmission 3 described above is described with reference to FIG. 1 to FIG. 10.

When the oil pump 29 is driven to supply a hydraulic pressure after the internal combustion engine 2 is started, the regulator valve 10 and the solenoid modulator valve 11 generate the line pressure PL and the modulator pressure Pmod. The generated line pressure PL and the generated modulator pressure Pmod are supplied to the linear solenoid valve 70 and the ON/OFF solenoid valve 79 such that the hydraulic oil flows from the first oil passages 81 of the first oil passage layer 50a included in the solenoid arrangement portion 40 into the second oil passages 82 of the second oil passage layer 50b included in the valve arrangement portion 60 via the large-diameter oil passages 83 or the small-diameter oil passages 84 of the third oil passage layer 50c of the oil passage arrangement portion 50. The linear solenoid valve 70 operates in response to an electric signal from the ECU 5 to generate and output a desired hydraulic pressure based on the line pressure PL or the modulator pressure Pmod. The ON/OFF solenoid valve 79 operates in response to an electric signal from the ECU 5 to turn ON or OFF the supply of the hydraulic pressure based on the line pressure PL or the modulator pressure Pmod.

A part of the hydraulic pressure supplied from the linear solenoid valve 70 or the ON/OFF solenoid valve 79 is supplied to the automatic transmission 3 through the oil passage arrangement portion 50 and the valve arrangement portion 60. Another part of the hydraulic pressure supplied from the linear solenoid valve 70 or the ON/OFF solenoid valve 79 is supplied to the selector valve 66 through the oil passage arrangement portion 50. Thus, the hydraulic pressure is supplied to the automatic transmission 3 such that the position of a spool 66p of the selector valve 66 is switched, the ports 66a communicate with each other, or the communication is interrupted. By supplying the hydraulic pressure to the automatic transmission 3, the clutches, the brakes, and the like of the automatic transmission 3 engage or disengage to achieve a desired shift speed, or the respective units of the automatic transmission 3 are lubricated.

Next, the oil passages for the hydraulic oil in the valve body are described in detail with reference to FIG. 6 to FIG. 8. First, the oil passages that communicate the linear solenoid valve SLT and the regulator valve 10 with each other (see FIG. 10) are described. As illustrated in FIG. 6, the hydraulic oil output from the output port 71o of the linear solenoid valve SLT is supplied to the groove 434a formed on the fourth surface 434 of the third block 43, and flows in the second direction D2 through a communication oil passage 91b formed in the third block 43. As illustrated in FIG. 7, the hydraulic oil reaches the sixth surface 526 of the fifth block 52 through the communication oil passage 91b, and flows outward through an oil passage 84b in a direction along the sixth surface 526, in this case along the width direction W. Then, the hydraulic oil flows in a direction in which the oil passage is bent substantially in the arraying direction X, and flows in the second direction D2 through a communication oil passage 92b formed in the fifth block 52. As illustrated in FIG. 8, the hydraulic oil reaches the seventh surface 617 of the sixth block 61 through the communication oil passage 92b, and is supplied to the groove 617a formed on the seventh surface 617 of the sixth block 61. Then, the hydraulic oil is supplied to the port 10a of the regulator valve 10.

In the oil passage ranging from the output port 71o of the linear solenoid valve SLT to the port 10a of the regulator valve 10, the communication oil passage 91b is bent in the width direction W and substantially in the arraying direction X by the oil passage 84b on the sixth surface 526 of the fifth block 52. Thus, when viewed in the stacking direction L, the oil passage 84b extends across an oil passage 82a on the seventh surface 617, which communicates the port 13g of the L/U relay valve 13 and the port 12a of the circulation modulator valve 12 with each other. Therefore, the oil passage 84b that communicates the communication oil passage 91b and the communication oil passage 92b with each other bypasses the oil passage 82a in the stacking direction L. Accordingly, interference with the oil passage 82a can be prevented, and the increase in the size of the valve body can be suppressed.

As illustrated in FIG. 6, an oil passage 71j that communicates from the input port 71i of the linear solenoid valve SLT communicates with an oil passage 82b formed on the seventh surface 617 of the sixth block 61 via a communication oil passage 91n formed in the third block 43 and a communication oil passage 92n formed in the fifth block 52 (see FIG. 7). The oil passage 82b communicates the ports 11a and 11b of the solenoid modulator valve 11 with each other, and the modulator pressure Pmod output from the solenoid modulator valve 11 is supplied to the linear solenoid valve SLT via the communication oil passage 92b and the communication oil passage 91b.

The pressure regulating port 10c of the regulator valve 10 illustrated in FIG. 8 communicates with an oil passage 84i (see FIG. 7) via a communication oil passage 92i, and communicates with the feedback port 10e of the regulator valve 10 via a communication oil passage 92j. Thus, feedback is performed in the regulator valve 10.

The output port 15a of the check valve 15 illustrated in FIG. 8 communicates with an oil passage 82m, and supplies the line pressure PL to other unillustrated portions via a communication oil passage 93m. Further, the output port 15a of the check valve 15 communicates with a communication oil passage 91m from an oil passage 83m (see FIG. 7) via the communication oil passage 93m from the oil passage 82m. The communication oil passage 91m communicates with the oil passage 71j that communicates with the input port 71i of the linear solenoid valve SLU (see FIG. 6). Therefore, the line pressure PL is input to the input port 71i of the linear solenoid valve SLU.

As illustrated in FIG. 6, the hydraulic oil output from the output port 71o of the linear solenoid valve SLU is supplied to the groove 434a formed on the fourth surface 434 of the third block 43, and flows in the second direction D2 through a communication oil passage 91a formed in the third block 43. As illustrated in FIG. 7, the hydraulic oil reaches the sixth surface 526 of the fifth block 52 through the communication oil passage 91a, and flows through an oil passage 83a in a direction along the sixth surface 526, in this case in the width direction W. Then, the hydraulic oil flows in the second direction D2 through a communication oil passage 92a formed in the fifth block 52. As illustrated in FIG. 8, the hydraulic oil reaches the seventh surface 617 of the sixth block 61 through the communication oil passage 92a, and is supplied to the groove 617a formed on the seventh surface 617 of the sixth block 61. Then, the hydraulic oil is supplied to the port 13c of the L/U relay valve 13.

In the oil passage ranging from the output port 71o of the linear solenoid valve SLU to the port 13c of the L/U relay valve 13, the communication oil passage 91a communicates in the width direction W by the oil passage 83a on the sixth surface 526 of the fifth block 52. Thus, when viewed in the stacking direction L, the oil passage 83a extends across the drain oil passage 86b on the seventh surface 617. Therefore, the oil passage 83a that communicates the communication oil passage 91a and the communication oil passage 92a with each other bypasses the drain oil passage 86b in the stacking direction L. Accordingly, interference with the oil passage 86b can be prevented, and the increase in the size of the valve body can be suppressed.

As illustrated in FIG. 8, the drain port 13d of the L/U relay valve 13 communicates with the drain oil passage 86b, and is open to the outside of the valve body via a communication oil passage 93a. The port 13g of the L/U relay valve 13 communicates with the port 12a of the circulation modulator valve 12 via the oil passage 82a.

The first oil chamber 13a of the L/U relay valve 13 communicates with a communication oil passage 92k via an oil passage 82k. As illustrated in FIG. 7, the communication oil passage 92k communicates with a communication oil passage 91k via an oil passage 84k. As illustrated in FIG. 6, the communication oil passage 91k communicates with an output port 79o of the ON/OFF solenoid valve 79a via an oil passage 81k. Thus, the signal pressure output from the ON/OFF solenoid valve 79a is supplied to the first oil chamber 13a of the L/U relay valve 13 via the oil passage described above. Accordingly, the spool 13p can be moved.

As illustrated in FIG. 8, a port 16a of the clutch control valve 16 communicates with the drain oil passage 86c. The drain oil passage 86c is open to the outside from a portion between the sixth block 61 and the seventh block 62 to drain the hydraulic oil that is drained from the port 16a.

As illustrated in FIG. 6, the hydraulic oil output from the output port 71o of the linear solenoid valve SL6 flows in the second direction D2 through a communication oil passage 91c formed in the third block 43. As illustrated in FIG. 7, the hydraulic oil reaches the sixth surface 526 of the fifth block 52 through the communication oil passage 91c, and flows through an oil passage 83c in a direction along the sixth surface 526. Then, the hydraulic oil flows in the second direction D2 through a communication oil passage 92c formed in the fifth block 52. As illustrated in FIG. 8, the hydraulic oil reaches the seventh surface 617 of the sixth block 61 through the communication oil passage 92c, and is supplied to the port 14a of the sequence valve 14.

In the oil passage ranging from the output port 71o of the linear solenoid valve SL6 to the port 14a of the sequence valve 14, the communication oil passage 91c communicates in the direction along the sixth surface 526 by the oil passage 83c on the sixth surface 526 of the fifth block 52. Thus, when viewed in the stacking direction L, the oil passage 83c extends across the drain oil passage 86c for the port 16a of the clutch control valve 16 on the seventh surface 617. Therefore, the oil passage 83c that communicates the communication oil passage 91c and the communication oil passage 92c with each other bypasses the drain oil passage 86c in the stacking direction L. Accordingly, interference with the drain oil passage 86c can be prevented, and the increase in the size of the valve body can be suppressed.

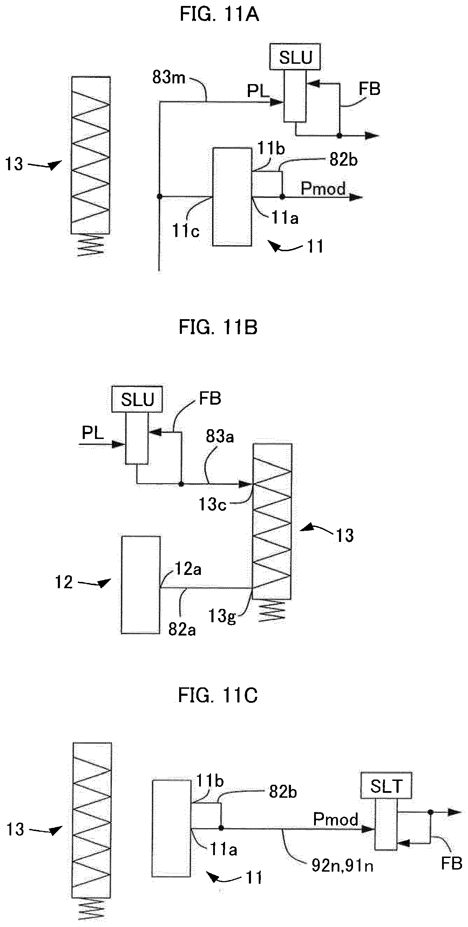

A first pattern is a coupling pattern in which the second oil passage 82 communicates ports of one valve with each other and the oil passage 83 or 84 communicates with a port other than the ports that communicate with the second oil passage 82 out of the ports of the one valve. For example, as illustrated in FIG. 11A, the first pattern is a coupling pattern in which the second oil passage 82b communicates the ports 11a and 11b of the solenoid modulator valve 11 with each other and the oil passage 83m communicates with the port 11c other than the ports 11a and 11b out of the ports of the solenoid modulator valve 11. The oil passage 83m communicates with the input port of the linear solenoid valve SLU, and the output port of the linear solenoid valve SLU communicates with the feedback port via a feedback oil passage FB.

A second pattern is a coupling pattern in which the second oil passage 82 communicates ports of different valves with each other and the oil passage 83 or 84 communicates with a port other than the ports that communicate with the second oil passage 82 out of the ports of the different valves. For example, as illustrated in FIG. 11B, the second pattern is a coupling pattern in which the second oil passage 82a communicates the port 13g of the L/U relay valve 13 and the port 12a of the circulation modulator valve 12 with each other and the oil passage 83a communicates with the port 13c other than the port 13g of the L/U relay valve 13 and the port 12a of the circulation modulator valve 12. The oil passage 83a communicates with the output port of the linear solenoid valve SLU, and the output port communicates with the feedback port via the feedback oil passage FB.

A third pattern is a coupling pattern in which the second oil passage 82 communicates ports of one valve with each other and the oil passage 83 or 84 communicates with the second oil passage 82. For example, as illustrated in FIG. 11C, the third pattern is a coupling pattern in which the second oil passage 82 communicates the ports 11a and 11b of the solenoid modulator valve 11 with each other and the communication oil passages 92n and 91n communicate with the second oil passage 82. For convenience of description, description is given of the case where the communication oil passages 92n and 91n that communicate in the stacking direction L are used to communicate the second oil passage 82 and the linear solenoid valve SLT with each other instead of using the oil passage 83 or 84 that is the third oil passage. As a matter of course, the third pattern is originally a pattern in which the oil passage 83 or 84 that is the third oil passage is used for communication. The communication oil passages 92n and 91n communicate with the input port of the linear solenoid valve SLT, and the output port of the linear solenoid valve SLT communicates with the feedback port via the feedback oil passage FB.

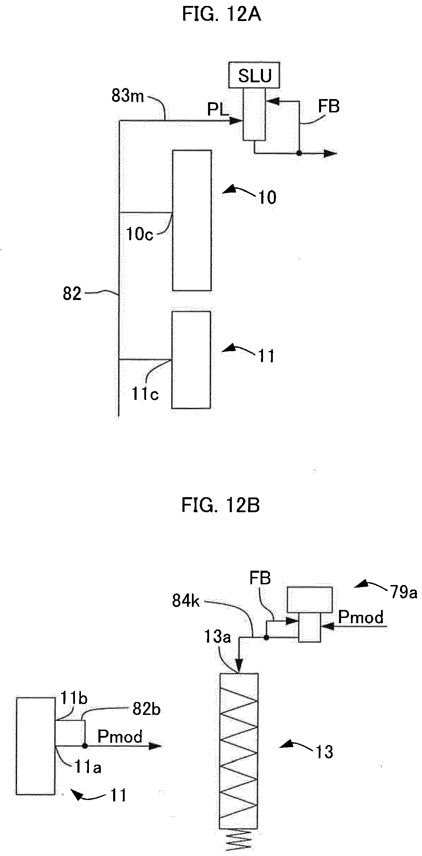

A fourth pattern is a coupling pattern in which the second oil passage 82 communicates ports of different valves with each other and the oil passage 83 or 84 communicates with the second oil passage 82. For example, as illustrated in FIG. 12A, the fourth pattern is a coupling pattern in which the second oil passage 82 communicates the port 10c of the regulator valve 10 and the port 11c of the solenoid modulator valve 11 with each other and the oil passage 83m communicates with the second oil passage 82. The oil passage 83m communicates with the input port of the linear solenoid valve SLU, and the output port of the linear solenoid valve SLU communicates with the feedback port via the feedback oil passage FB.

A fifth pattern is a coupling pattern in which the second oil passage 82 communicates ports of one valve with each other and the third oil passage communicates with a port of a valve different from the one valve. For example, as illustrated in FIG. 12B, the fifth pattern is a coupling pattern in which the second oil passage 82b communicates the ports 11a and 11b of the solenoid modulator valve 11 with each other and the third oil passage 84k communicates with a port of the first oil chamber 13a of the L/U relay valve 13 different from the solenoid modulator valve 11. The oil passage 84k communicates with the output port of the ON/OFF solenoid valve 79a, and the output port communicates with the feedback port via the feedback oil passage FB.

As described above, according to the hydraulic controller 4 for the automatic transmission 3 of this embodiment, each of the oil passages 83 and 84 provided in the third oil passage layer 50c is provided orthogonally to the stacking direction L of the first oil passage layer 50a and the second oil passage layer 50b, and communicates one port of the linear solenoid valve 70 or the ON/OFF solenoid valve 79 and one port of the selector valve 66 with each other. Therefore, in the third oil passage layer 50c, the oil passage and the ports of the linear solenoid valve 70 or the ON/OFF solenoid valve 79 and the selector valve 66 can be prevented from being located in the same region in a mixed manner. Thus, each of the oil passages 83 and 84 does not need to bypass the ports significantly. Accordingly, the increase in the size of the valve body can be suppressed by suppressing an increase in the length of the oil passage between the linear solenoid valve 70 or the ON/OFF solenoid valve 79 and the selector valve 66.

In the linear solenoid valve 70, the pressure regulating unit 71 is arranged and housed in the solenoid arrangement portion 40 at the center in the width direction W. Therefore, the portion where the hydraulic pressure is supplied is also located in the vicinity of the center of the solenoid arrangement portion 40. The selector valve 66 is housed in the valve arrangement portion 60 substantially over the entire range in the width direction. Therefore, a hydraulic oil chamber 66b is located at the end of the valve arrangement portion 60. As a result, the output port of the linear solenoid valve 70 and the input port of the selector valve 66 may significantly be offset in the width direction W, and the size of the valve body may increase. According to the hydraulic controller 4 of this embodiment, each of the large-diameter oil passage 83 and the small-diameter oil passage 84 does not need to bypass the ports 70a and 66a significantly. Therefore, the output port of the linear solenoid valve 70 and the input port of the selector valve 66 can be communicated with each other by a short oil passage. Thus, the increase in the size of the valve body can be suppressed.

According to the hydraulic controller 4 for the automatic transmission 3 of this embodiment, each of the oil passage arrangement portion 50, the solenoid arrangement portion 40, and the valve arrangement portion 60 has a stacking structure formed by integral molding of a synthetic resin. Therefore, it is possible to attain a cost-efficient valve body that is lighter in weight and higher in productivity than a metal valve body.

According to the hydraulic controller 4 for the automatic transmission 3 of this embodiment, the sectional shape of each of the large-diameter oil passage 83, the small-diameter oil passage 84, and other oil passages is a circular shape. Therefore, each oil passage can attain a sufficient pressure resistance in terms of its structure even when the valve body is structured by a synthetic resin having a rigidity lower than that of a metal.

According to the hydraulic controller 4 for the automatic transmission 3 of this embodiment, the protrusion 515b and the recesses 526b are joined to each other to surround and seal each of the oil passages 83 and 84 located within both of the fifth surface 515 and the sixth surface 526. Since the protrusion 515b and the recesses 526b that join the fourth block 51 and the fifth block 52 to each other also seal each of the oil passages 83 and 84, the increase in the size of the valve body can be suppressed while securing the sealability required in each of the oil passages 83 and 84 as compared to a case where the joining portions and the sealing portions are provided separately.

According to the hydraulic controller 4 for the automatic transmission 3 of this embodiment, the first joining portion is the protrusion 515b that protrudes toward the recess 526b, and the second joining portion is the recess 526b to which the protrusion 515b is fitted and which is recessed in the same direction as the direction in which the protrusion 515b protrudes. Therefore, the joining strength of the joining portions can be improved as compared to a case where the fifth surface 515 and the sixth surface 526 are directly joined to each other without providing the protrusion 515b and the recess 526b. Thus, it is possible to reduce a distance between the oil passages 83 and 84 that is necessary to attain a desired strength. By fitting the protrusion 515b to the recess 526b, a partition wall that suppresses oil leakage is formed in a direction along the fifth surface 515 and the sixth surface 526 when viewed from each of the oil passages 83 and 84. Thus, the increase in the size of the valve body can be suppressed while securing the sealability required in each of the oil passages 83 and 84 as compared to the case where the protrusion 515b and the recess 526b are not provided.

According to the hydraulic controller 4 for the automatic transmission 3 of this embodiment, the height of the protrusion 515b is smaller than the depth of the recess 526b, the sealing member is filled into the space between the distal end surface of the protrusion 515b and the bottom surface of the recess 526b, and the sealing member achieves the state in which the protrusion 515b and the recess 526b are joined to each other. Therefore, the sealing member can be injected in the entire range more effectively than a case where the protrusion 515b and the recess 526b are provided with no clearance therebetween. Thus, the sealability required in each of the oil passages 83 and 84 can be secured.

According to the hydraulic controller 4 for the automatic transmission 3 of this embodiment, the sealing member is the injection molding material, and the protrusion 515b and the recess 526b are joined to each other by injection molding. Therefore, the DSI method can be employed for manufacturing the valve body. Thus, excellent productivity can be attained.

According to the hydraulic controller 4 for the automatic transmission 3 of this embodiment, the solenoid unit 72 of the linear solenoid valve 70 provided in the solenoid arrangement portion 40 is arranged so as to overlap the small-diameter oil passage 84 of the oil passage arrangement portion 50 when viewed in the stacking direction L. Therefore, the thickness in the stacking direction L can be reduced as compared to a case where the solenoid unit 72 is arranged so as to overlap the large-diameter oil passage 83 having a diameter larger than that of the small-diameter oil passage 84. Thus, the increase in the size of the valve body of the hydraulic controller 4 can be suppressed.

In the hydraulic controller 4 for the automatic transmission 3 of this embodiment described above, description is given of the case where the height of the protrusion 515b is smaller than the depth of the recess 526b. The present invention is not limited to this case. The height of the protrusion 515b and the depth of the recess 526b may be set equal to each other. In this case, the protrusion 515b and the recess 526b are joined to each other by bonding or crimping.

In the automatic transmission 3 of this embodiment, description is given of the case where all the layers of the first block 41 to the eighth block 63 are formed of a synthetic resin. The present invention is not limited to this case. For example, at least a part of the layers may be formed of a metal by aluminum die casting.

### <Second Embodiment>

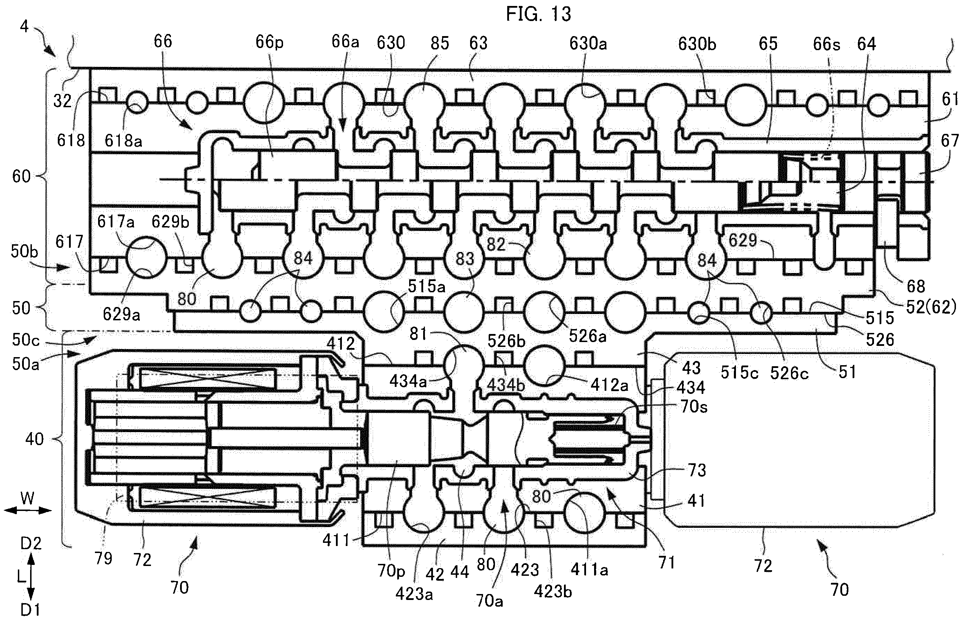

Next, a second embodiment is described in detail with reference to FIG. 13. In the hydraulic controller 4 of this embodiment, for example, the first joining portion on the fifth surface 515 is a flat surface, and the second joining portion on the sixth surface 526 is the recess 526b. That is, at least one of the first joining portion and the second joining portion is the recess, the sealing member is filled into the recess 526b, and the sealing member achieves a state in which the fifth surface 515 and the recess 526b are joined to each other. Similarly, the joining portion on the first surface 411 is a flat surface, and the joining portion on the third surface 423 is the recess 423b. The joining portion on the second surface 412 is a flat surface, and the joining portion on the fourth surface 434 is the recess 434b. The joining portion on the seventh surface 617 is a flat surface, and the joining portion on the ninth surface 629 is the recess 629b. The joining portion on the eighth surface 618 is a flat surface, and the joining portion on the tenth surface 630 is the recess 630b. Regarding features other than those features, the structure of the second embodiment is similar to that of the first embodiment. Therefore, the same reference symbols are used to omit detailed description.

Also in this embodiment, the sealing member is filled into the space between the fifth surface 515 and the bottom surface of the recess 526b, and the sealing member achieves the state in which the fifth surface 515 and the recess 526b are joined to each other. The sealing member is an injection molding material, and the fifth surface 515 and the recess 526b are joined to each other by injection molding. The sealing member is not limited to the injection molding material, but may be an adhesive or the like.

According to the hydraulic controller 4 for the automatic transmission 3 of this embodiment as well, in the third oil passage layer 50c, the ports 70a and 66a of the valves 70, 79, and 66 and the oil passages 83 and 84 can be prevented from being located in the same layer in a mixed manner. Thus, each of the large-diameter oil passage 83 and the small-diameter oil passage 84 does not need to bypass the ports 70a and 66a significantly. Accordingly, the increase in the size of the valve body can be suppressed by suppressing the increase in the length of each of the oil passages 83 and 84 in the oil passage arrangement portion 50 provided between the two valve layers that are the solenoid arrangement portion 40 and the valve arrangement portion 60.

In the hydraulic controller 4 for the automatic transmission 3 of this embodiment, the first joining portion has the flat surface shape, and the second joining portion is the recess 526b. Therefore, the joining strength of the joining portions can be improved as compared to a case where the fifth surface 515 and the sixth surface 526 are directly joined to each other without providing the recess 526b. Thus, it is possible to reduce the distance between the oil passages 83 and 84 that is necessary to attain a desired strength. Accordingly, the increase in the size of the valve body can be suppressed while securing the sealability required in each of the oil passages 83 and 84 as compared to the case where the recess 526b is not provided.

In the hydraulic controller 4 for the automatic transmission 3 of this embodiment described above, for example, the first joining portion on the fifth surface 515 is the flat surface, and the second joining portion on the sixth surface 526 is the recess 526b. The present invention is not limited to this case. For example, the first joining portion on the fifth surface 515 may be the recess, and the second joining portion on the sixth surface 526 may be the flat surface. Alternatively, both of the first joining portion on the fifth surface 515 and the second joining portion on the sixth surface 526 may be the recesses.

### <Third Embodiment>

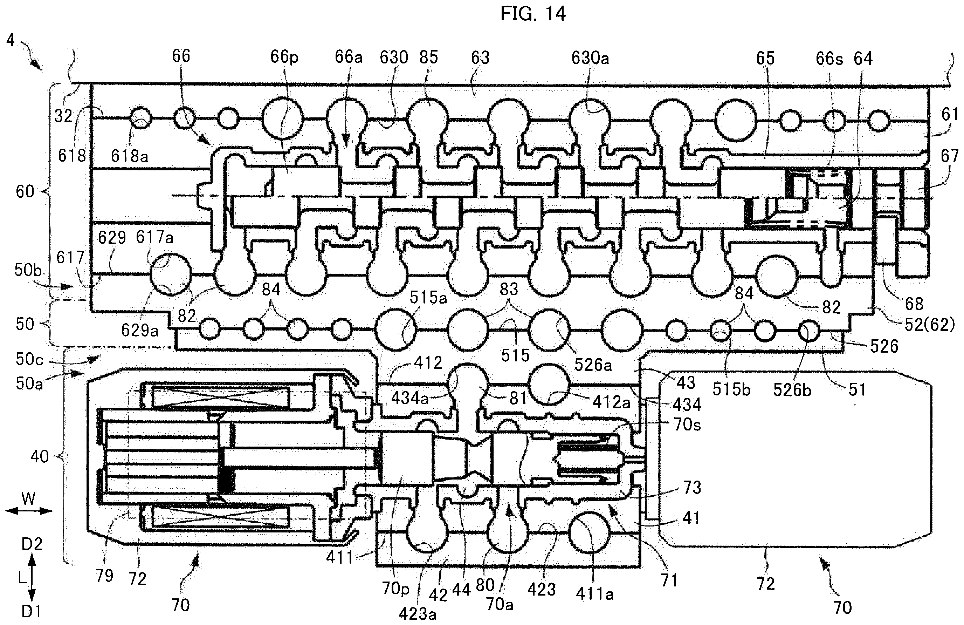

Next, a third embodiment is described in detail with reference to FIG. 14. The hydraulic controller 4 of this embodiment is structurally different from that of the first embodiment in that the protrusion and the recess serving as the joining portions are not formed on the surfaces where the blocks are joined to each other and the blocks are integrated by fixing flat surfaces as the joining portions by bonding, welding, or the like. Regarding features other than that feature, the structure of the third embodiment is similar to that of the first embodiment. Therefore, the same reference symbols are used to omit detailed description.

In this embodiment, the first surface 411 does not have the protrusion 411b, and the third surface 423 does not have the recess 423b. The first block 41 and the second block 42 that are stacked together are integrated by fixing the first surface 411 and the second surface 423 by bonding, welding, or the like. The second surface 412 does not have the protrusion 412b, and the fourth surface 434 does not have the recess 434b. The first block 41 and the third block 43 that are stacked together are integrated by fixing the second surface 412 and the fourth surface 434 by bonding, welding, or the like. The fifth surface 515 does not have the protrusion 515b, and the sixth surface 526 does not have the recess 526b. The fourth block 51 and the fifth block 52 that are stacked together are integrated by fixing the fifth surface 515 and the sixth surface 526 by bonding, welding, or the like. The seventh surface 617 does not have the protrusion 617b, and the ninth surface 629 does not have the recess 629b. The sixth block 61 and the seventh block 62 that are stacked together are integrated by fixing the seventh surface 617 and the ninth surface 629 by bonding, welding, or the like. The eighth surface 618 does not have the protrusion 618b, and the tenth surface 630 does not have the recess 630b. The sixth block 61 and the eighth block 63 that are stacked together are integrated by fixing the eighth surface 618 and the tenth surface 630 by bonding, welding, or the like.

According to the hydraulic controller 4 for the automatic transmission 3 of this embodiment as well, in the third oil passage layer 50c, the ports 70a and 66a of the valves 70, 79, and 66 and the oil passages 83 and 84 can be prevented from being located in the same layer in a mixed manner. Thus, each of the large-diameter oil passage 83 and the small-diameter oil passage 84 does not need to bypass the ports 70a and 66a significantly. Accordingly, the increase in the size of the valve body can be suppressed by suppressing the increase in the length of each of the oil passages 83 and 84 in the oil passage arrangement portion 50 provided between the two valve layers that are the solenoid arrangement portion 40 and the valve arrangement portion 60.

### <Fourth Embodiment>

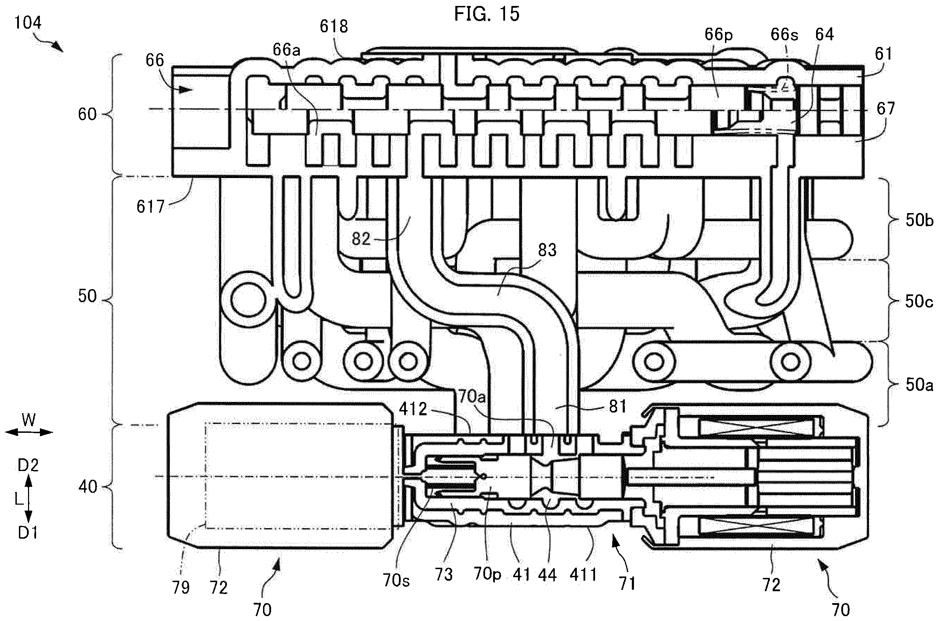

Next, a fourth embodiment is described in detail with reference to FIG. 15. A hydraulic controller 104 of this embodiment is structurally different from the hydraulic controller 4 of the first embodiment in that each of the oil passages 81, 82, and 83 has a substantially circular pipe shape in cross section. Regarding features other than that feature, the structure of the fourth embodiment is similar to that of the first embodiment. Therefore, the same reference symbols are used to omit detailed description.

In this embodiment, each of the oil passages 81, 82, and 83 is three-dimensionally formed of a metal, a resin, or the like, and three-dimensionally couples the linear solenoid valve 70 and the selector valve 66 to each other. The oil passage 83 that is formed three-dimensionally is an oil passage formed in a direction intersecting the stacking direction L. The direction intersecting the stacking direction L includes a direction orthogonal to the stacking direction L and a direction inclined with respect to the stacking direction L. The oil passage 83 may have a part provided in a direction along the stacking direction L. In this embodiment, a plurality of layers of the oil passages 83 are formed and housed in the third oil passage layer 50c.

The end of the first oil passage 81 on the solenoid arrangement portion 40 side is connected to the port 70a of the linear solenoid valve 70 or the port of the solenoid valve 70, and the end of the second oil passage 82 on the valve arrangement portion 60 side is connected to the port 66a of the selector valve 66. The oil passage 83 communicates the first oil passage 81 and the second oil passage 82 with each other. The respective oil passages 83 are formed by being bent three-dimensionally so as to avoid mutual contact between the oil passages 83. The respective oil passages 83 communicate corresponding ports with each other with a minimum number of bends and the shortest distance while avoiding interfering with each other. Thus, the overall length of the oil passage can be reduced as compared to a case where the oil passage is formed two-dimensionally. Accordingly, the oil passage arrangement portion 50 can be downsized.

According to the hydraulic controller 104 for the automatic transmission 3 of this embodiment as well, in the third oil passage layer 50c, the ports 70a and 66a of the valves 70, 79, and 66 and the oil passage 83 can be prevented from being located in the same layer in a mixed manner. Thus, the oil passage 83 does not need to bypass the ports 70a and 66a significantly. Accordingly, the increase in the size of the valve body can be suppressed by suppressing the increase in the length of the oil passage 83 in the oil passage arrangement portion 50 provided between the two valve layers that are the solenoid arrangement portion 40 and the valve arrangement portion 60.

### <Fifth Embodiment>

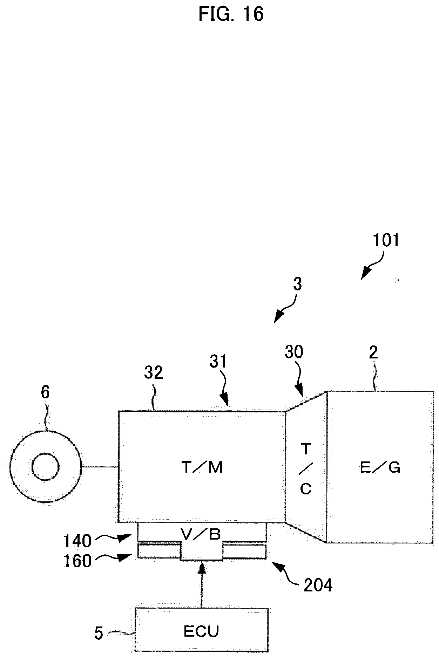

Next, a second embodiment is described in detail with reference to FIG. 16 to FIG. 20C. This embodiment is structurally different from the first embodiment in that the oil passage arrangement portion is not provided between a solenoid arrangement portion 160 and a valve arrangement portion 140. Regarding structures other than that structure, this embodiment is similar to the first embodiment. Therefore, the same reference symbols are used to omit detailed description.

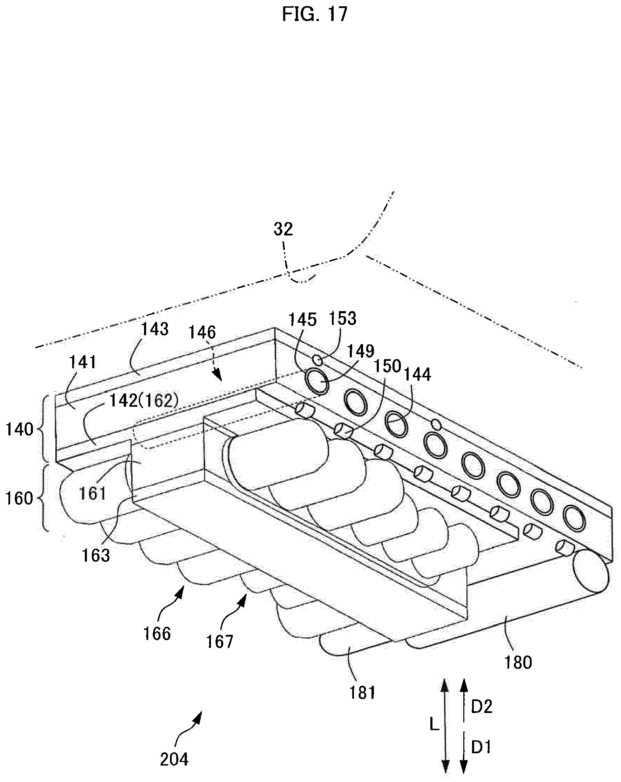

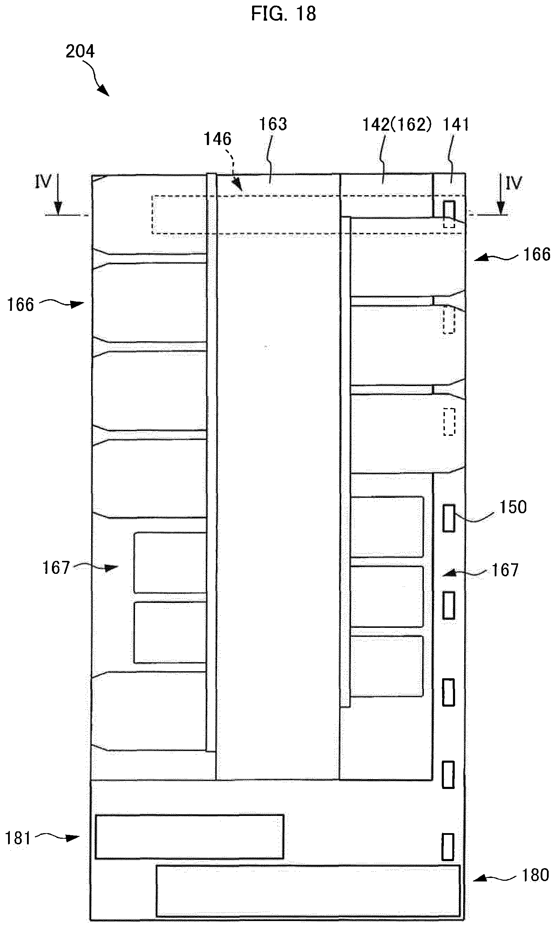

As illustrated in FIG. 16, a vehicle 101 of this embodiment includes, for example, the internal combustion engine 2, the automatic transmission 3, a hydraulic controller 204 and the ECU (controller) 5 configured to control the automatic transmission 3, and the wheels 6. As illustrated in FIG. 17 and FIG. 18, the hydraulic controller 204 includes the valve arrangement portion 140 that is attached to the transmission case 32 and is provided with selector valves (valves) 146, and the solenoid arrangement portion 160 that is stacked on a side of the valve arrangement portion 140 away from the automatic transmission 3 and is provided with linear solenoid valves 166, solenoid valves 167, and the like.

The valve arrangement portion 140 is structured by stacking substantially plate-shaped synthetic resin blocks having three layers that are a first layer 141, a second layer 142, and a third layer 143 and integrating the blocks by, for example, bonding or welding. The valve arrangement portion 140 is mounted on the automatic transmission 3, and is capable of supplying hydraulic pressures to the automatic transmission 3. Grooves that have a semicircular shape in cross section and are recessed from division surfaces (facing surfaces) are formed in the first layer 141, the second layer 142, and the third layer 143. The grooves of the stacked layers are mated with each other to form oil passages.

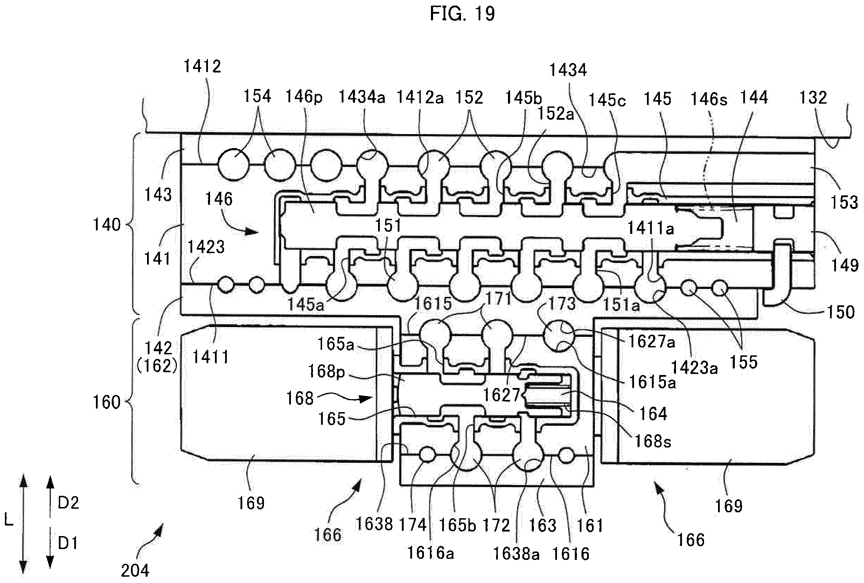

As illustrated in FIG. 19, the first layer 141 is arranged at the center of the three layers that structure the valve arrangement portion 140, and has a first division surface 1411 and a second division surface 1412 that are provided on opposite surfaces, a plurality of first holes (holes) 144, a plurality of first grooves 1411a, and a plurality of second grooves 1412a. The plurality of first holes 144 are formed between the first division surface 1411 and the second division surface 1412 along the first division surface 1411 and the second division surface 1412. In this embodiment, the first layer 141 is formed by insert molding of bottomed cylindrical metal sleeves 145. The inside of the sleeve 145 is the first hole 144. The selector valve 146 that is a spool valve is formed in each sleeve 145. That is, each sleeve 145 houses a slidable spool 146p, an urging spring 146s that is a compression coil spring configured to press the spool 146p in one direction, and a stopper 149 configured to keep a state in which the urging spring 146s presses the spool 146p. The selector valve 146 is formed by those components. The stopper 149 is fixed to the vicinity of the opening of the sleeve 145 with a fastener 150.

First ports 145a, second ports 145b, and a third port 145c that are a large number of through holes are formed on an outer peripheral wall portion of each sleeve 145. Each of the ports 145a, 145b, and 145c is formed substantially over the entire circumference, and a part other than the opening is closed by the synthetic resin that structures the first layer 141. That is, the plurality of ports 145a, 145b, and 145c of the plurality of selector valves 146 including the spools 146p housed in the first holes 144 are arranged in the first layer 141, and the communication states in the sleeves 145 are changed depending on the positions of the spools 146p. The first groove 1411a is formed into a semicircular shape in cross section on the first division surface 1411, and communicates with the first port 145a. The first groove 1411a forms a first oil passage 151 together with a third groove 1423a formed on a third division surface 1423 of the second layer 142 described later. The second groove 1412a is formed into a semicircular shape in cross section on the second division surface 1412, and communicates with the second port 145b. The second groove 1412a forms a second oil passage 152 together with a fourth groove 1434a formed on a fourth division surface 1434 of the third layer 143 described later.

The second layer 142 is stacked on the opposite side of the first layer 141 from the transmission case 32. The second layer 142 has the third division surface 1423 that faces the first division surface 1411 of the first layer 141, and the plurality of third grooves 1423a formed into a semicircular shape in cross section on the third division surface 1423. The third groove 1423a faces the first groove 1411a. The third division surface 1423 is stacked so as to face the first division surface 1411 of the first layer 141, thereby forming the plurality of first oil passages 151 between the plurality of first grooves 1411a and the plurality of third grooves 1423a. Therefore, the first oil passage 151 communicates with the first port 145a of the selector valve 146.

That is, the first oil passages 151 communicate with the plurality of first ports 145a formed on the first direction D1 side that is one side in a direction orthogonal to a central line of the selector valve 146, and are arranged on the first direction D1 side with respect to the selector valve 146. The plurality of first oil passages 151 are arranged in array along the direction of the central line of the selector valve 146 on the first direction D1 side. The first oil passage 151 has a circular shape in cross section. The first oil passage 151 is arranged on the first direction D1 side of the first port 145a to be coupled, and is arranged in communication with the first port 145a via a first coupling oil passage 151a. The diameter of the first oil passage 151 is set larger than the width of the first coupling oil passage 151a that is viewed in a radial direction of the selector valve 146.

The third layer 143 is stacked on the opposite side of the first layer 141 from the second layer 142, and is attached to the transmission case 32. The third layer 143 has the fourth division surface 1434 that faces the second division surface 1412 of the first layer 141, and the plurality of fourth grooves 1434a formed into a semicircular shape in cross section on the fourth division surface 1434. The fourth groove 1434a faces the second groove 1412a. The fourth division surface 1434 is stacked so as to face the second division surface 1412 of the first layer 141, thereby forming the plurality of second oil passages 152 between the plurality of second grooves 1412a and the plurality of fourth grooves 1434a. Therefore, the second oil passage 152 communicates with the second port 145b of the selector valve 146.

That is, the second oil passages 152 communicate with the plurality of second ports 145b formed on the second direction D2 side that is a side opposite to the first direction D1 side of the selector valve 146, and are arranged on the second direction D2 side with respect to the selector valve 146. The second oil passage 152 is arranged on the second direction D2 side such that the position along the direction of the central line of the selector valve 146 is located between the positions of adjacent first oil passages 151 along the direction of the central line of the selector valve 146. The second oil passage 152 has a circular shape in cross section. The second oil passage 152 is arranged on the second direction D2 side of the second port 145b to be coupled, and is arranged in communication with the second port 145b via a second coupling oil passage 152a. The diameter of the second oil passage 152 is set larger than the width of the second coupling oil passage 152a that is viewed in the radial direction of the selector valve 146.

In this embodiment, regarding the oil passages 151 and 152 that communicate with the ports 145a and 145b formed in the sleeve 145, the first oil passages 151 and the second oil passages 152 are alternately arranged in the order of array along the sleeve 145. That is, the first oil passages 151 and the second oil passages 152 are arranged such that their longitudinal directions are orthogonal to the direction of the central line of the selector valve 146.

The first oil passages 151 formed by the first layer 141 and the second layer 142 communicate with the solenoid arrangement portion 160, or communicate the first ports 145a of the selector valve 146 with each other. The first oil passages 151 that communicate the first ports 145a of the selector valve 146 with each other are formed only by the first layer 141 and the second layer 142, and are not arranged between adjacent selector valves 146 and 146.

The second oil passages 152 formed by the first layer 141 and the third layer 143 communicate with the automatic transmission 3, or communicate the second ports 145b of the selector valve 146 with each other. The second oil passages 152 that communicate the second ports 145b of the selector valve 146 with each other are formed only by the first layer 141 and the third layer 143, and are not arranged between adjacent selector valves 146 and 146. That is, the oil passages 151 or 152 that communicate the ports 145a or 145b of the plurality of selector valves 146 and 146 with each other are formed between the second layer 142 and the first layer 141 or between the first layer 141 and the third layer 143. Therefore, an increase in the distance between adjacent selector valves 146 and 146 is suppressed. Thus, an increase in the size of the hydraulic controller 204 can be prevented.

In this embodiment, an oil passage 153 that communicates with the third port 145c and extends along a longitudinal direction of the first hole 144 is formed by, for example, the first layer 141 and the third layer 143. The oil passage 153 is exposed to the side end surface of the valve arrangement portion 140, and an unillustrated pipe may be attached to the oil passage 153. Oil passages 154 that do not communicate with the ports are formed by, for example, the first layer 141 and the third layer 143. Signal oil passages 155 that do not communicate with the ports and are narrower than the oil passages 154 are formed by the first layer 141 and the second layer 142. For example, the signal oil passage 155 is used for supplying a hydraulic pressure to a hydraulic pressure sensor as a hydraulic pressure detection target. The valve arrangement portion 140 is also provided with an unillustrated oil passage that extends through the valve arrangement portion 140 in the stacking direction L and allows a hydraulic pressure supplied from the solenoid arrangement portion 160 to be supplied directly to the automatic transmission 3.

The solenoid arrangement portion 160 is structured by stacking substantially plate-shaped synthetic resin blocks having three layers that are a fourth layer (first layer) 161, a fifth layer (third layer) 162, and a sixth layer (second layer) 163 and integrating the blocks by, for example, bonding or welding. The solenoid arrangement portion 160 is stacked on the valve arrangement portion 140, and is capable of supplying hydraulic pressures to the valve arrangement portion 140. Grooves that have a semicircular shape in cross section and are recessed from division surfaces are formed in the fourth layer 161, the fifth layer 162, and the sixth layer 163. The grooves of the stacked layers are mated with each other to form oil passages. In this embodiment, the second layer 142 and the fifth layer 162 are integrated as the same member. The second layer 142 and the fifth layer 162 need not be formed by the same member, but may be formed by separate members and integrated by bonding, welding, or the like.

The fourth layer 161 is arranged at the center of the three layers that structure the solenoid arrangement portion 160, and has a fifth division surface (second division surface) 1615 and a sixth division surface (first division surface) 1616 that are provided on opposite surfaces, a plurality of second holes (holes) 164, a plurality of ports 165a and 165b, a plurality of fifth grooves 1615a, and a plurality of sixth grooves 1616a. The plurality of second holes 164 are formed between the fifth division surface 1615 and the sixth division surface 1616 along the fifth division surface 1615 and the sixth division surface 1616. In this embodiment, the fourth layer 161 is formed by insert molding of bottomed cylindrical metal sleeves 165. The inside of the sleeve 165 is the second hole 164. The linear solenoid valve 166 or the solenoid valve 167 (see FIG. 17 and FIG. 18) is formed in each sleeve 165. The linear solenoid valve 166 includes a pressure regulating unit 168 housed in the sleeve 165, and a solenoid unit 69 configured to drive the pressure regulating unit 168 in response to an electric signal. The pressure regulating unit 168 includes a slidable spool 168p configured to regulate a hydraulic pressure, and an urging spring 168s that is a compression coil spring configured to press the spool 168p in one direction.

The ports 165a and 165b that are a large number of through holes are formed on the peripheral side surface of each sleeve 165. Each of the ports 165a and 165b is formed substantially over the entire circumference, and a part other than the opening is closed by the synthetic resin that structures the fourth layer 161. That is, the plurality of ports 165a and 165b of the plurality of linear solenoid valves 166 or solenoid valves 167 including the spools 168p housed in the second holes 164 are arranged in the fourth layer 161. The fifth groove 1615a is formed into a semicircular shape in cross section on the fifth division surface 1615, and communicates with the port (second port) 165a that is a part of the plurality of ports 165a and 165b. The fifth groove 1615a forms a third oil passage (second oil passage) 171 together with a seventh groove 1627a formed on a seventh division surface (fourth division surface) 1627 of the fifth layer 162 described later. The sixth groove 1616a is formed into a semicircular shape in cross section on the sixth division surface 1616, and communicates with the port (first port) 165b that is the other part of the plurality of ports 165a and 165b. The sixth groove 1616a forms a fourth oil passage (first oil passage) 172 together with an eighth groove 1638a formed on an eighth division surface (third division surface) 1638 of the sixth layer 163 described later.

The fifth layer 162 is stacked on the fourth layer 161 on the transmission case 32 side. The fifth layer 162 has the seventh division surface 1627 that faces the fifth division surface 1615 of the fourth layer 161, and the plurality of seventh grooves 1627a formed into a semicircular shape in cross section on the seventh division surface 1627. The seventh groove 1627a faces the fifth groove 1615a. The seventh division surface 1627 is stacked so as to face the fifth division surface 1615 of the fourth layer 161, thereby forming the plurality of third oil passages 171 between the plurality of fifth grooves 1615a and the plurality of seventh grooves 1627a. Therefore, the third oil passage 171 communicates with the port 165a that is a part of the plurality of ports 165a and 165b of the linear solenoid valve 166 or the solenoid valve 167.

The sixth layer 163 is stacked on the opposite side of the fourth layer 161 from the fifth layer 162. The sixth layer 163 has the eighth division surface 1638 that faces the sixth division surface 1616 of the fourth layer 161, and the plurality of eighth grooves 1638a formed into a semicircular shape in cross section on the eighth division surface 1638. The eighth groove 1638a faces the sixth groove 1616a. The eighth division surface 1638 is stacked so as to face the sixth division surface 1616 of the fourth layer 161, thereby forming the plurality of fourth oil passages 172 between the plurality of sixth grooves 1616a and the plurality of eighth grooves 1638a. Therefore, the fourth oil passage 172 communicates with the port 165b that is the other part of the plurality of ports 165a and 165b of the linear solenoid valve 166 or the solenoid valve 167.

In this embodiment, regarding the oil passages 171 and 172 that communicate with the ports 165a and 165b formed in the sleeve 165, the third oil passages 171 and the fourth oil passages 172 are alternately arranged in the order of array along the sleeve 165. That is, at least some of the third oil passages 171 and the fourth oil passages 172 are arranged in a staggered pattern while the linear solenoid valve 166 or the solenoid valve 167 is interposed in the stacking direction L.

The third oil passages 171 formed by the fourth layer 161 and the fifth layer 162 communicate with the valve arrangement portion 140, or communicate the ports 165a of the linear solenoid valve 166 or the ports of the solenoid valve 167 with each other. The third oil passages 171 that communicate the ports 165a of the linear solenoid valve 166 or the ports of the solenoid valve 167 with each other are formed only by the fourth layer 161 and the fifth layer 162, and are not arranged between adjacent linear solenoid valves 166 or solenoid valves 167.

The fourth oil passages 172 formed by the fourth layer 161 and the sixth layer 163 communicate the ports 165b of the linear solenoid valve 166 or the ports of the solenoid valve 167 with each other. The fourth oil passages 172 that communicate the ports 165b of the linear solenoid valve 166 or the ports of the solenoid valve 167 with each other are formed only by the fourth layer 161 and the sixth layer 163, and are not arranged between adjacent linear solenoid valves 166 or solenoid valves 167. That is, the oil passages 171 or 172 that communicate the ports 165a or 165b of the plurality of linear solenoid valves 166 or solenoid valves 167 with each other are formed between the fifth layer 162 and the fourth layer 161 or between the fourth layer 161 and the sixth layer 163. Therefore, an increase in the distance between adjacent linear solenoid valves 166 or solenoid valves 167 is suppressed. Thus, the increase in the size of the hydraulic controller 204 can be prevented.

In this embodiment, an oil passage 173 that does not communicate with the ports is formed by, for example, the fourth layer 161 and the fifth layer 162. A signal oil passage 174 that does not communicate with the ports and is narrower than the oil passage 173 is formed by the fourth layer 161 and the sixth layer 163.

In this embodiment, as illustrated in FIG. 17 and FIG. 18, the solenoid arrangement portion 160 is provided with a regulator valve 180 and a modulator valve 181 (source pressure valves) configured to regulate a source pressure to be supplied to the linear solenoid valve 166 and the solenoid valve 167. Each of the regulator valve 180 and the modulator valve 181 is a spool valve including an unillustrated spool and an unillustrated urging spring, and communicates with the linear solenoid valve 166 and the solenoid valve 167 by the oil passages 171 and 172. Each of the regulator valve 180 and the modulator valve 181 regulates a hydraulic pressure supplied from an unillustrated oil pump to generate a line pressure or a modulator pressure, and supplies the line pressure or the modulator pressure to the linear solenoid valve 166 and the solenoid valve 167 as the source pressure.

As described above, according to the hydraulic controller 204 for the automatic transmission 3 of this embodiment, in the valve arrangement portion 140, the first oil passages 151 are arranged on the first direction D1 side in array along the direction of the central line of the selector valve 146, and the second oil passages 152 are each arranged on the second direction D2 side such that the position along the direction of the central line of the selector valve 146 is located between the positions of adjacent first oil passages 151 along the direction of the central line of the selector valve 146. That is, in the valve arrangement portion 140, the first oil passages 151 and the second oil passages 152 are arranged in a staggered pattern while the selector valve 146 is interposed in the stacking direction L. Therefore, the oil passages 151 and 152 that communicate with adjacent ports 145a and 145b are not arranged adjacently. Thus, there is no need to increase the pitch of the ports 145a and 145b. Accordingly, an increase in the overall length of the selector valve 146 can be suppressed. As a result, the increase in the size of the valve body can be suppressed while the valve body is formed by stacking the blocks formed of a synthetic resin or the like.

According to the hydraulic controller 204 for the automatic transmission 3 of this embodiment, in the solenoid arrangement portion 160, similarly to the valve arrangement portion 140, the fourth oil passages 172 are arranged on the first direction D1 side in array along a direction of a central line of the linear solenoid valve 166 or the solenoid valve 167, and the third oil passages 171 are each arranged on the second direction D2 side such that the position along the direction of the central line of the linear solenoid valve 166 or the solenoid valve 167 is located between the positions of adjacent fourth oil passages 172 along the direction of the central line of the linear solenoid valve 166 or the solenoid valve 167. That is, the third oil passages 171 and the fourth oil passages 172 are arranged in a staggered pattern while the linear solenoid valve 166 or the solenoid valve 167 is interposed in the stacking direction L. Therefore, the oil passages 171 and 172 that communicate with adjacent ports 165a and 165b are not arranged adjacently. Thus, there is no need to increase the pitch of the ports 165a and 165b. Accordingly, an increase in the overall length of the linear solenoid valve 166 or the solenoid valve 167 can be suppressed. As a result, the increase in the size of the valve body can be suppressed while the valve body is formed by stacking the blocks formed of a synthetic resin or the like.

According to the hydraulic controller 204 for the automatic transmission 3 of this embodiment, the oil passages that communicate the ports 145a or 145b of the selector valves 146 with each other are formed between the second layer 142 and the first layer 141 or between the first layer 141 and the third layer 143. The oil passages 171 or 172 that communicate the ports 165a or 165b of the plurality of linear solenoid valves 166 or solenoid valves 167 with each other are formed between the fifth layer 162 and the fourth layer 161 or between the fourth layer 161 and the sixth layer 163. Therefore, the increase in the distance between various valves 146, 166, or 167 adjacent to each other is suppressed. Thus, the increase in the size of the hydraulic controller 204 can be prevented.

In the hydraulic controller 204 for the automatic transmission 3 of this embodiment described above, description is given of the case where the valve arrangement portion 140 is attached to the transmission case 32 and the solenoid arrangement portion 160 is stacked on a side of the valve arrangement portion 140 away from the automatic transmission 3. The present invention is not limited to this case. For example, the solenoid arrangement portion 160 may be mounted on the transmission case 32 of the automatic transmission 3, and may be capable of supplying hydraulic pressures to the automatic transmission 3. Further, the valve arrangement portion 140 may be mounted on a side of the solenoid arrangement portion 160 away from the automatic transmission 3.

In the hydraulic controller 204 for the automatic transmission 3 of this embodiment, description is given of the case where all of the first layer 141 to the sixth layer 163 are formed of a synthetic resin. The present invention is not limited to this case. For example, at least a part of the layers may be formed of a metal by aluminum die casting.

In the hydraulic controller 204 for the automatic transmission 3 of this embodiment, each of the oil passages 151, 152, 171, and 172 has a circular shape in cross section. The present invention is not limited to this case. Each of the oil passages 151, 152, 171, and 172 may have a rectangular shape in cross section.

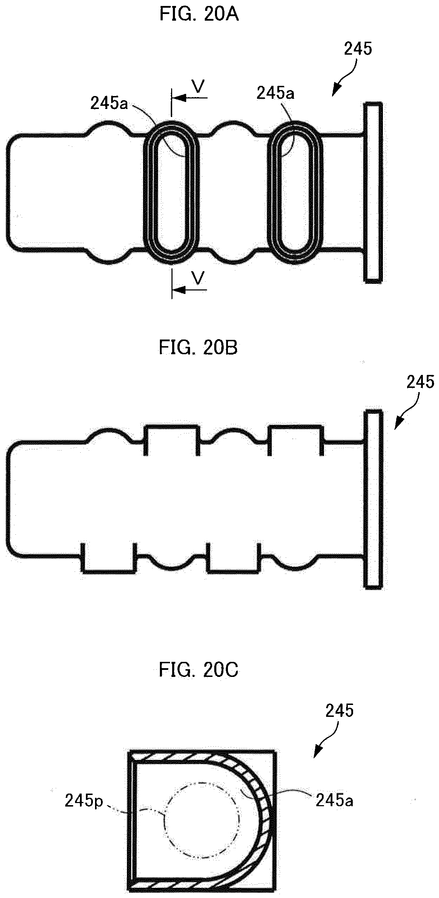

In the hydraulic controller 204 for the automatic transmission 3 of this embodiment, each of the first port 145a and the second port 145b has a tubular shape that communicates the inside and the outside of the sleeve 145 with each other. The present invention is not limited to this case. For example, as illustrated in FIG. 20A, FIG. 20B, and FIG. 20C, a sleeve 245 may have ports 245a provided in an annular shape that surrounds a spool 245p in a circumferential direction about a central line of the spool 245p.

The embodiments include at least the following structures. The hydraulic controller (4, 104) for the vehicle transmission apparatus (3) of the embodiments is the hydraulic controller (4, 104) configured to control a hydraulic pressure of oil to be output from the oil pump (29) and supplied to the vehicle transmission apparatus (3). The hydraulic controller (4, 104) includes the first oil passage (81) that communicates two ports of the plurality of solenoid valves (70, 79) having the plurality of ports with each other, the second oil passage (82) that communicates two ports of the plurality of valves (66) having the plurality of ports with each other, and the third oil passage (83, 84) provided in the third region (50c) provided in an overlapping manner between the first region (50a) in which the first oil passage (81) is arranged and the second region (50b) in which the second oil passage (82) is arranged, the third oil passage (83, 84) being orthogonal to the overlapping direction (L) of the first region (50a) and the second region (50b). The third oil passage (83, 84) communicates any one port out of the ports of the solenoid valves (70, 79) and any one port out of the ports of the valves (66) with each other. According to this structure, the third oil passage (83, 84) provided in the third region (50c) is provided orthogonally to the overlapping direction (L) of the first region (50a) and the second region (50b), and communicates one port of the solenoid valve (70, 79) and one port of the valve (66) with each other. Therefore, in the third region (50c), the oil passage and the ports of the solenoid valve (70, 79) and the valve (66) can be prevented from being located in the same region in a mixed manner. Thus, the third oil passage (83, 84) does not need to bypass the ports significantly. Accordingly, the increase in the size of the valve body can be suppressed by suppressing the increase in the length of the oil passage between the solenoid valve (70, 79) and the valve (66).

In the hydraulic controller (4) for the vehicle transmission apparatus (3) of the embodiments, at least parts of central lines of the first oil passage (81), the second oil passage (82), and the third oil passage (83) are arranged within parallel planes that are different from each other among the first oil passage (81), the second oil passage (82), and the third oil passage (83, 84). According to this structure, the first region (50a), the second region (50b), and the third region (50c) can be provided in an overlapping manner. Thus, the increase in the size of the valve body can be suppressed.

In the hydraulic controller (4) for the vehicle transmission apparatus (3) of the embodiments, the second oil passage (82b) communicates the ports (11a, 11b) of one valve (11) out of the valves with each other, and the third oil passage (83m) communicates with the port (11c) other than the ports (11a, 11b) that communicate with the second oil passage (82b) out of the ports of the one valve (11). According to this structure as well, the increase in the size of the valve body can be suppressed.

In the hydraulic controller (4) for the vehicle transmission apparatus (3) of the embodiments, the second oil passage (82a) communicates the ports (12a, 13g) of different valves (12, 13) out of the valves with each other, and the third oil passage (83a) communicates with the port (13c) other than the ports (12a, 13g) that communicate with the second oil passage (82a) out of the ports of the different valves (12, 13). According to this structure as well, the increase in the size of the valve body can be suppressed.

In the hydraulic controller (4) for the vehicle transmission apparatus (3) of the embodiments, the second oil passage (82b) communicates the ports (11a, 11b) of one valve (11) out of the valves with each other, and the third oil passage communicates with the second oil passage (82b). According to this structure as well, the increase in the size of the valve body can be suppressed.

In the hydraulic controller (4) for the vehicle transmission apparatus (3) of the embodiments, the second oil passage (82) communicates the ports (10c, 11c) of different valves (10, 11) out of the valves with each other, and the third oil passage (83m) communicates with the second oil passage (82). According to this structure as well, the increase in the size of the valve body can be suppressed.

In the hydraulic controller (4) for the vehicle transmission apparatus (3) of the embodiments, the second oil passage (82b) communicates the ports (11a, 11b) of one valve (11) out of the valves with each other, and the third oil passage (84k) communicates with the port (first oil chamber 13a) of the valve (13) different from the one valve (11). According to this structure as well, the increase in the size of the valve body can be suppressed.

In the hydraulic controller (4) for the vehicle transmission apparatus (3) of the embodiments, the solenoid valve (70) and the valve (10, 13) are arranged in parallel. In the pressure regulating unit (71) that houses the spool (70p), the output port (71o) of the solenoid valve (70) is arranged at the central part in the movement direction of the spool (70p). In the valve (10, 13), the hydraulic oil chamber (10r, 13a) for moving the spool (10p, 13p) by the supplied hydraulic pressure is arranged at the end of the valve (10, 13). In this case, when an attempt is made to minimize the length of the oil passage that communicates the output port (71o) of the solenoid valve (70) and the hydraulic oil chamber (10r, 13a) of the valve (10, 13) with each other, the offset between the solenoid valve (70) and the valve (10, 13) in the direction (W) orthogonal to the stacking direction (L) increases. As a result, the size of the valve body increases. According to the structure of the hydraulic controller (4) for the vehicle transmission apparatus (3) of the embodiments, the third oil passage (83, 84) is provided orthogonally to the overlapping direction (L) of the first region (50a) and the second region (50b). Therefore, the increase in the size of the valve body can be suppressed while the solenoid valve (70) and the valve (10, 13) communicate with each other without the offset in the direction (W) orthogonal to the stacking direction (L).

In this case, the output-side oil passage of the solenoid valve (70, 79) is also arranged at the central part of the valve body. Therefore, the output of the solenoid valve (70, 79) is arranged at the central part of the valve body, and the input (signal pressure port) of the valve (66) is arranged at the end of the valve (66). Thus, the oil passage is provided in three stages, and extends in the direction orthogonal to the overlapping direction (L) in the third region (50c). Accordingly, the increase in the size of the valve body in the orthogonal direction can be suppressed while minimizing the length of the oil passage.

In the hydraulic controller (4) for the vehicle transmission apparatus (3) of the embodiments, the valve (10) is the pressure regulating valve (10), and includes the urging member (10s) configured to urge the spool (10p) in one direction. The hydraulic oil chamber (10r) is the urging member housing chamber (10r) that houses the urging member (10s). According to this structure, when the valve is the pressure regulating valve, the increase in the size of the valve body can be suppressed while the solenoid valve (70, 79) and the valve communicate with each other without the offset in the direction (W) orthogonal to the stacking direction.

In the hydraulic controller (4) for the vehicle transmission apparatus (3) of the embodiments, the valve is the selector valve, and includes the urging member configured to urge the spool in one direction. The hydraulic oil chamber is the oil chamber for moving the spool in the direction in which the spool repels the urging member by the supplied hydraulic pressure, and is arranged at the end on the opposite side of the valve from the urging member. According to this structure, when the valve is the selector valve, the increase in the size of the valve body can be suppressed while the solenoid valve (70, 79) and the valve communicate with each other without the offset in the direction (W) orthogonal to the stacking direction.

In the hydraulic controller (4) for the vehicle transmission apparatus (3) of the embodiments, each of the first region (50a), the third region (50c), and the second region (50b) has a structure obtained by combining a plurality of stacks (41, 43, 51, 51, 62, 61) in which at least a part of the first oil passage to the third oil passage (81, 82, 83, 84) is formed and which is formed by integral molding of a synthetic resin. According to this structure, it is possible to attain a cost-efficient valve body that is lighter in weight and higher in productivity than a metal valve body.

In the hydraulic controller (104) for the vehicle transmission apparatus (3) of the embodiments, each of the first oil passage to the third oil passage (81, 82, 83, 84) has a pipe shape. According to this structure, the oil passages can be arranged irrespective of the facing surfaces of the blocks as compared to a case where the oil passages are formed by stacking plate-shaped blocks. Therefore, the degree of freedom in terms of arrangement of the oil passages can be increased. Thus, the increase in the size of the valve body can be suppressed.

The hydraulic controller (4, 104) for the vehicle transmission apparatus (3) of the embodiments includes the first layer (40) that houses the plurality of solenoid valves (70, 79), the second layer (60) that houses the plurality of valves (66), and the third layer (50) provided between the first layer (40) and the second layer (60) by stacking the first layer (40), the second layer (60), and the third layer (50). The third layer (50) includes the first oil passage to the third oil passage (81, 82, 83, 84) provided in the first region (50a), the second region (50b), and the third region (50c). According to this structure, the increase in the size of the valve body can be suppressed while the valve body has the three-layer stacking structure.

In the hydraulic controller (4, 104) for the vehicle transmission apparatus (3) of the embodiments, the sectional shape of the third oil passage (83, 84) is a circular shape. According to this structure, each oil passage (83, 84) can attain a sufficient pressure resistance in terms of its structure even when the valve body is structured by a synthetic resin having a rigidity lower than that of a metal.

In the hydraulic controller (4, 104) for the vehicle transmission apparatus (3) of the embodiments, the solenoid valve (70) is the linear solenoid valve (70) including the pressure regulating unit (71) configured to regulate the hydraulic pressure by the spool, and the solenoid unit (72) configured to drive the pressure regulating unit (71) in response to the electric signal. According to this structure, the increase in the size of the valve body can be suppressed while the linear solenoid valve (70) is arranged.

In the hydraulic controller (4, 104) for the vehicle transmission apparatus (3) of the embodiments, the solenoid valve (79) is the ON/OFF solenoid valve (79) configured to switch between the supply of the output pressure and the stop of the supply in response to the electric signal. According to this structure, the increase in the size of the valve body can be suppressed while the ON/OFF solenoid valve (79) is arranged.

In the hydraulic controller (4, 104) for the vehicle transmission apparatus (3) of the embodiments, the solenoid valves (70, 79) are arranged adjacently in parallel along the direction orthogonal to the overlapping direction (L) of the first region (50a) and the second region (50b). The solenoid valves (70, 79) adjacent to each other are arranged in sequence such that their solenoid units (72) are alternately oriented to opposite sides in the axial direction of the solenoid valves (70, 79). According to this structure, the input ports of the solenoid valves (70, 79) can be arranged close to each other. Accordingly, a short input-side oil passage can be arranged linearly. Since the adjacent solenoid units (72) are alternately oriented to opposite sides, the length in the arraying direction can be reduced as compared to a case where the solenoid units (72) are arrayed while being oriented to the same side. Also in this case, the output-side oil passage of the solenoid valve (70, 79) is arranged at the central part of the valve body. Therefore, the output of the solenoid valve (70, 79) is arranged at the central part of the valve body, and the input (signal pressure port) of the valve (66) is arranged at the end of the valve (66). Thus, the oil passage is provided in three stages, and extends in the direction orthogonal to the overlapping direction (L) in the third region (50c). Accordingly, the increase in the size of the valve body in the orthogonal direction can be suppressed while minimizing the length of the oil passage.

In the hydraulic controller (4, 104) for the vehicle transmission apparatus (3) of the embodiments, the valve (66) is the spool valve (66) including the movable spool (66p), the urging member (66s) configured to urge the spool (66p) in one direction, and the hydraulic oil chamber for moving the spool (66p) in the direction in which the spool (66p) repels the urging member (66s) by the supplied hydraulic pressure. According to this structure, the increase in the size of the valve body can be suppressed while the spool valve (66) is arranged.

In the hydraulic controller (4) for the vehicle transmission apparatus (3) of the embodiments, the solenoid valve (SLU) is the linear solenoid valve (SLU) configured to regulate and supply the source pressure, and the valve (13) is the lock-up relay valve (13) configured to engage or disengage the lock-up clutch (35) through the supply of the hydraulic pressure from the linear solenoid valve (SLU). According to this structure, the increase in the size of the valve body can be suppressed even in the combination of, for example, the linear solenoid valve (SLU) and the lock-up relay valve (13).

In the hydraulic controller (4) for the vehicle transmission apparatus (3) of the embodiments, the solenoid valve (SLT) is the linear solenoid valve (SLT) configured to regulate and supply a constant hydraulic pressure, and the valve (10) is the regulator valve (10) configured to regulate the source pressure as the line pressure (PL) through the supply of the hydraulic pressure from the linear solenoid valve (SLT). According to this structure, the increase in the size of the valve body can be suppressed even in the combination of, for example, the linear solenoid valve (SLT) and the regulator valve (10).

The hydraulic controller (4) for the vehicle transmission apparatus (3) of the embodiments is the hydraulic controller (4) configured to control a hydraulic pressure of oil to be output from the oil pump (29) and supplied to the vehicle transmission apparatus (3). The hydraulic controller (4) includes the first oil passage (81) that communicates two ports of the plurality of solenoid valves (70, 79) having the plurality of ports with each other, the second oil passage (86b, 86c) that communicates any one port of the plurality of valves (66) having the plurality of ports and the outside of the hydraulic controller (4) with each other and is arranged in parallel to the valves (66), and the third oil passage (83, 84) provided in the third region provided in an overlapping manner between the first region (50a) in which the first oil passage (81) is arranged and the second region in which the second oil passage (86b, 86c) is arranged, the third oil passage (83, 84) being orthogonal to the overlapping direction (L) of the first region (50a) and the second region (50b). The third oil passage (83, 84) communicates any one port out of the ports of the solenoid valves (70, 79) and any one port out of the ports of the valves (66) with each other. According to this structure, the third oil passage (83, 84) is provided while bypassing the second oil passage (86b, 86c) in the overlapping direction (L). Thus, interference between the third oil passage (83, 84) and the second oil passage (86b, 86c) can be prevented. Accordingly, the increase in the size of the valve body can be suppressed by suppressing the increase in the length of the oil passage between the solenoid valve (70, 79) and the valve (66).

In the hydraulic controller (4) for the vehicle transmission apparatus (3) of the embodiments, the second oil passage (86b) communicates with the port (13d) of the valve (13) with which the third oil passage (83a) communicates. According to this structure, the third oil passage (83a) is provided while bypassing the second oil passage (86b) in the overlapping direction (L). Thus, interference between the third oil passage (83a) and the second oil passage (86b) can be prevented, and the increase in the size of the valve body can be suppressed.

In the hydraulic controller (4) for the vehicle transmission apparatus (3) of the embodiments, the second oil passage (86c) communicates with the port (16a) of the valve (16) different from the valve (14) with which the third oil passage (83c) communicates. According to this structure, the third oil passage (83c) is provided while bypassing the second oil passage (86c) in the overlapping direction (L). Thus, interference between the third oil passage (83c) and the second oil passage (86c) can be prevented, and the increase in the size of the valve body can be suppressed.

### INDUSTRIAL APPLICABILITY

The hydraulic controller for the vehicle transmission apparatus according to the present disclosure can be mounted on, for example, a vehicle. In particular, the hydraulic controller is suitable for use in an automatic transmission configured to switch engagement elements and the like through supply or release of hydraulic pressures.

### Description of the Reference Numerals

3 automatic transmission (vehicle transmission apparatus)
4, 104 hydraulic controller
10 regulator valve (valve)
11 solenoid modulator (valve)
12 circulation modulator valve (valve)
13 lock-up relay valve (valve)
14 sequence valve (valve)
29 oil pump
35 lock-up clutch
40 solenoid arrangement portion (first layer)
50 oil passage arrangement portion (third layer)
50a first oil passage layer (first region)
50b second oil passage layer (second region)
50c third oil passage layer (third region)
60 valve arrangement portion (second layer)
66 selector valve (valve, spool valve)
66a port
66b hydraulic oil chamber
66p spool
66s urging spring (urging member)
70 linear solenoid valve (solenoid valve)
70a port
70p spool
71 pressure regulating unit
72 solenoid unit
79 ON/OFF solenoid valve (solenoid valve)
81 first oil passage
82 second oil passage
83 large-diameter oil passage (third oil passage)
84 small-diameter oil passage (third oil passage)
86b, 86c drain oil passage (second oil passage)
L stacking direction (overlapping direction)
SL1, SL2, SL3, SL4 linear solenoid valve (solenoid valve)
SL5, SL6, SLT, SLU linear solenoid valve (solenoid valve)

## Claims

1. A hydraulic controller for a vehicle transmission apparatus, which is configured to control a hydraulic pressure of oil to be output from an oil pump and supplied to the vehicle transmission apparatus, the hydraulic controller comprising:
a first oil passage that communicates two ports of a plurality of solenoid valves having a plurality of ports with each other;
a second oil passage that communicates two ports of a plurality of valves having a plurality of ports with each other; and
a third oil passage provided in a third region provided in an overlapping manner between a first region in which the first oil passage is arranged and a second region in which the second oil passage is arranged, the third oil passage being orthogonal to an overlapping direction of the first region and the second region,
wherein the third oil passage communicates any one port out of the ports of the solenoid valves and any one port out of the ports of the valves with each other.

2. The hydraulic controller for a vehicle transmission apparatus according to claim 1, wherein at least parts of central lines of the first oil passage, the second oil passage, and the third oil passage are arranged within parallel planes that are different from each other among the first oil passage, the second oil passage, and the third oil passage.

3. The hydraulic controller for a vehicle transmission apparatus according to claim 1 or 2, wherein
the second oil passage communicates ports of one valve out of the valves with each other, and
the third oil passage communicates with a port other than the ports that communicate with the second oil passage out of the ports of the one valve.

4. The hydraulic controller for a vehicle transmission apparatus according to claim 1 or 2, wherein
the second oil passage communicates ports of different valves out of the valves with each other, and
the third oil passage communicates with a port other than the ports that communicate with the second oil passage out of the ports of the different valves.

5. The hydraulic controller for a vehicle transmission apparatus according to claim 1 or 2, wherein
the second oil passage communicates ports of one valve out of the valves with each other, and
the third oil passage communicates with the second oil passage.

6. The hydraulic controller for a vehicle transmission apparatus according to claim 1 or 2, wherein
the second oil passage communicates ports of different valves out of the valves with each other, and
the third oil passage communicates with the second oil passage.

7. The hydraulic controller for a vehicle transmission apparatus according to claim 1 or 2, wherein
the second oil passage communicates ports of one valve out of the valves with each other, and
the third oil passage communicates with a port of the valve different from the one valve.

8. The hydraulic controller for a vehicle transmission apparatus according to any one of claims 1 to 7, wherein
the solenoid valve and the valve are arranged in parallel,
in a pressure regulating unit that houses a spool, an output port of the solenoid valve is arranged at a central part in a movement direction of the spool, and
in the valve, a hydraulic oil chamber for moving a spool by the supplied hydraulic pressure is arranged at an end of the valve.

9. The hydraulic controller for a vehicle transmission apparatus according to claim 8, wherein
the valve is a pressure regulating valve, and includes an urging member configured to urge the spool in one direction, and
the hydraulic oil chamber is an urging member housing chamber that houses the urging member.

10. The hydraulic controller for a vehicle transmission apparatus according to claim 8, wherein
the valve is a selector valve, and includes an urging member configured to urge the spool in one direction, and
the hydraulic oil chamber is an oil chamber for moving the spool in a direction in which the spool repels the urging member by the supplied hydraulic pressure, and is arranged at an end on the opposite side of the valve from the urging member.

11. The hydraulic controller for a vehicle transmission apparatus according to any one of claims 1 to 10, wherein each of the first region, the third region, and the second region has a structure obtained by combining a plurality of stacks in which at least a part of the first oil passage to the third oil passage is formed and which is formed by integral molding of a synthetic resin.

12. The hydraulic controller for a vehicle transmission apparatus according to any one of claims 1 to 10, wherein each of the first oil passage to the third oil passage has a pipe shape.

13. The hydraulic controller for a vehicle transmission apparatus according to any one of claims 1 to 12, further comprising a first layer that houses the plurality of solenoid valves, a second layer that houses the plurality of valves, and a third layer provided between the first layer and the second layer by stacking the first layer, the second layer, and the third layer,
wherein the third layer includes the first oil passage to the third oil passage provided in the first region, the second region, and the third region.

14. The hydraulic controller for a vehicle transmission apparatus according to any one of claims 1 to 13, wherein a sectional shape of the third oil passage is a circular shape.

15. The hydraulic controller for a vehicle transmission apparatus according to any one of claims 1 to 14, wherein the solenoid valve is a linear solenoid valve including a pressure regulating unit configured to regulate the hydraulic pressure by a spool, and a solenoid unit configured to drive the pressure regulating unit in response to an electric signal.

16. The hydraulic controller for a vehicle transmission apparatus according to any one of claims 1 to 14, wherein the solenoid valve is an ON/OFF solenoid valve configured to switch between supply of an output pressure and stop of the supply in response to an electric signal.

17. The hydraulic controller for a vehicle transmission apparatus according to any one of claims 1 to 16, wherein
the solenoid valves are arranged adjacently in parallel along a direction orthogonal to the overlapping direction of the first region and the second region, and
the solenoid valves adjacent to each other are arranged in sequence such that their solenoid units are alternately oriented to opposite sides in an axial direction of the solenoid valves.

18. The hydraulic controller for a vehicle transmission apparatus according to any one of claims 1 to 17, wherein the valve is a spool valve including a movable spool, an urging member configured to urge the spool in one direction, and a hydraulic oil chamber for moving the spool in a direction in which the spool repels the urging member by the supplied hydraulic pressure.

19. The hydraulic controller for a vehicle transmission apparatus according to any one of claims 1 to 15, wherein the solenoid valve is a linear solenoid valve configured to regulate and supply a source pressure, and the valve is a lock-up relay valve configured to engage or disengage a lock-up clutch through the supply of the hydraulic pressure from the linear solenoid valve.

20. The hydraulic controller for a vehicle transmission apparatus according to any one of claims 1 to 15, wherein the solenoid valve is a linear solenoid valve configured to regulate and supply a constant hydraulic pressure, and the valve is a regulator valve configured to regulate a source pressure as a line pressure through the supply of the hydraulic pressure from the linear solenoid valve.

21. A hydraulic controller for a vehicle transmission apparatus, which is configured to control a hydraulic pressure of oil to be output from an oil pump and supplied to the vehicle transmission apparatus, the hydraulic controller comprising:
a first oil passage that communicates two ports of a plurality of solenoid valves having a plurality of ports with each other;
a second oil passage that communicates any one port of a plurality of valves having a plurality of ports and an outside of the hydraulic controller with each other and is arranged in parallel to the valves; and
a third oil passage provided in a third region provided in an overlapping manner between a first region in which the first oil passage is arranged and a second region in which the second oil passage is arranged, the third oil passage being orthogonal to an overlapping direction of the first region and the second region,
wherein the third oil passage communicates any one port out of the ports of the solenoid valves and any one port out of the ports of the valves with each other.

22. The hydraulic controller for a vehicle transmission apparatus according to claim 21, wherein the second oil passage communicates with a port of the valve with which the third oil passage communicates.

23. The hydraulic controller for a vehicle transmission apparatus according to claim 21, wherein the second oil passage communicates with a port of a valve different from the valve with which the third oil passage communicates.
